(19) Europäisches Patentamt
European Patent Office
Office européen des brevets

(11) **EP 3 335 569 A1**

(12) **EUROPÄISCHE PATENTANMELDUNG**

(43) Veröffentlichungstag:
**20.06.2018 Patentblatt 2018/25**

(21) Anmeldenummer: **18152465.3**

(22) Anmeldetag: **01.10.2014**

(51) Int Cl.:
**A23G 1/00** (2006.01)   **A23G 1/46** (2006.01)
**A23G 1/30** (2006.01)   **A23G 1/40** (2006.01)
**A23L 33/10** (2016.01)   **A23L 33/20** (2016.01)
**A23P 10/22** (2016.01)   **A23P 10/40** (2016.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2013 EP 13186911**

(62) Dokumentnummer(n) der früheren Anmeldung(en) nach Art. 76 EPÜ:
**14786145.4 / 3 051 956**

(71) Anmelder: **Bühler AG**
**9240 Uzwil (CH)**

(72) Erfinder:
• **Windhab, Erich Josef**
**8261 Hemishofen (CH)**

• **Strähl, Patrick**
**8057 Zürich (CH)**
• **Hanselmann, William**
**9495 Triesen (LI)**

(74) Vertreter: **Hepp Wenger Ryffel AG**
**Friedtalweg 5**
**9500 Wil (CH)**

Bemerkungen:
Diese Anmeldung ist am 19-01-2018 als Teilanmeldung zu der unter INID-Code 62 erwähnten Anmeldung eingereicht worden.

(54) **SPHÄRISCHES PARTIKEL, SOWIE LEBENSMITTELSUSPENSIONEN UND VERZEHRMASSEN MIT SPHÄRISCHEN PARTIKELN, DIE EINE AMORPHE BIOPOLYMERMATRIX ENTHALTEN.**

(57) Die Erfindung betrifft sphärische Partikel, Agglomerate aus sphärischen Partikeln, Verfahren zum Herstellen von sphärischen Partikeln, Lebensmittelsuspensionen und Verzehrmassen mit sphärischen Partikeln sowie Lebensmittelprodukte enthaltend eine Lebensmittelsuspension und/oder eine Verzehrmasse.

Die Partikel enthalten ein Matrixmaterial aus einem amorph verfestigten Zucker, bevorzugt mit einem Dextroseäquivalent von grösser 20, und mit einem Gleichgewichtswassergehalt von bevorzugt kleiner als 10 Gewichts-%, wobei Milch oder ein Milchbestandteil, insbesondere ein Milchfett oder Anteile von Milchfetten, in das Matrixmaterial eingebettet ist. Die Lebensmittelsuspension enthält ein im Wesentlichen homogenes Trägermaterial, in welches die sphärischen Partikel eingebettet sind. Eine Verzehrmasse umfasst ein Agglomerat aus Partikeln, wobei ein Teil der Partikel die sphärischen Partikel sind.

Fig. 7

EP 3 335 569 A1

**Beschreibung**

Die Erfindung betrifft sphärische Partikel, Agglomerate aus sphärischen Partikeln, Verfahren zum Herstellen von sphärischen Partikeln, Lebensmittelsuspensionen und Verzehrmassen mit sphärischen Partikeln und Lebensmittelprodukte enthaltend eine Lebensmittelsuspension und/oder eine Verzehrmasse.

Zur Herstellung von konventionellen Schokoladenprodukten werden Teilchen, typischerweise bestehend aus kristallinem Zucker, Kakaobestandteilen und/oder Trockenmilchbestandteilen, in flüssiger Kakaobutter suspendiert. Diese wird in einem Temperiervorgang unter Kühlung vorkristallisiert und schliesslich unter Kühlung endverfestigt, insbesondere kristallisiert.

Schokoladenprodukte sollen von hoher sensorischer Qualität sein. Unter sensorischer Qualität wird hier die beim Verzehr wahrgenommene Geschmacks- und Texturqualität eines Verzehrprodukts, auch Lebensmittelprodukt genannt, verstanden, die den Genusswert bestimmt. Ein hoher Genusswert stellt sich für Schokoladenprodukte in der Regel dann ein, wenn die Schokoladenmasse im verfestigten Zustand eine knackige sowie gleichzeitig zarte, das heisst, beim Aufschmelzen eine niederviskos-kremige, Konsistenz hat, schnell schmilzt und sich im Mund glatt, das heisst, nicht wahrnehmbar rau, anfühlt.

Die sensorische Qualität kann mittels sogenannter "Quantitativer Deskriptiver Analyse (QDA)", bei der Testpersonen eingesetzt werden, beurteilt werden.

Die sensorische Qualität wird durch die Rohstoffe, zum Beispiel die Kakaobohnensorte, sowie insbesondere durch die Verarbeitungsschritte bei der Schokoladenherstellung bestimmt.

Bei der Herstellung eines konventionellen Schokoladenprodukts muss die Schokoladenmasse zur Erreichung hoher sensorischer Qualität zwischen Walzen zerkleinert und/oder conchiert werden, wobei in Folge der Zerkleinerung kantige Teilchen entstehen. Dabei werden die suspendierten Teilchen desagglomeriert, fein verteilt und hinsichtlich eines Teils ihrer zur Aromabildung beitragenden Inhaltskomponenten auch physikalisch und/oder chemisch verändert. Diese Vorgänge (Feinwalzen, Conchieren) sind höchst zeit- und energieaufwändig.

Im Rahmen der vorliegenden Anmeldung werden unter Zuckern süssende Komponenten verstanden, insbesondere Saccharide, also Mono-, Di- und Oligosaccharide, insbesondere mit einem Dextroseäquivalent (DE) von grösser als 20, Zuckeralkohole, Zuckeraustauschstoffe und Süssstoffe, sowie Kombinationen dieser. Das DE wird hierbei gemäss der Lane-Eynon-Methode bestimmt, die beispielsweise in "Zucker und Zuckerwaren" beschrieben ist (siehe Hoffmann/Mauch/Untze, 2. Aufl. 2002, ISBN 3-86022-937-0, S.234-235) .

Aus WO 2006/130698 ist bekannt, dass ein kosten- und/oder ein kalorienreduziertes Produkt erhalten werden kann, indem kristalliner Zucker durch amorphen Zucker ersetzt wird, wobei letzterer in der Regel eine niedrigere Dichte als kristalliner Zucker aufweist. In den amorphen Zucker können ferner Kakaoteilchen, Milchteilchen und/oder Fruchtpürees eingelagert sein. Der amorphe Zucker wird hergestellt, indem Zuckermaterial in Wasser gelöst wird, die Lösung erhitzt wird, das Wasser entfernt wird, das Material getrocknet und anschliessend gemahlen wird. Die so entstehenden Teilchen weisen typische Bruchkanten auf, aufgrund derer die Masse mit den suspendierten Teilchen noch nachbehandelt werden muss, um eine ausreichende sensorische Qualität zu erzielen.

Aus der WO 2006/005525 ist ein gesintertes Verzehrprodukt bekannt, bei welchem milch- oder zuckerbasierte sprühgetrocknete Pulver zu einem porösen Produkt zusammengefügt werden. Auf diese Weise kann ein Produkt mit einem geringen Fettgehalt und/oder einem hohen Kohlenhydratanteil erhalten werden. Die sensorische Qualität kann nicht durch Walzen oder Conchieren verbessert werden. Das resultierende Produkt ist nur bedingt fliessfähig.

Aus CH 502 834 ist ein Verfahren bekannt, bei dem kugelförmige Körner aus kristallinem Zucker mittels so genannter Sprühkristallisation hergestellt werden, wobei den Kugeln Kakaopulver, das beispielsweise Fett enthält, zugemischt ist. Die hergestellten Körner sind gut fliessfähig und können schnell in Wasser gelöst werden, so dass sie zur Herstellung eines gesüssten Instant-Kakaogetränks verwendet werden können. Zur Herstellung von Schokoladenprodukten sind diese Körner jedoch nicht geeignet.

Die Druckschrift EP 1064 856 betrifft das Einkapseln sogenannter aktiver Ingredienzien. Die aktiven Ingredienzen, zum Beispiel Aromastoffe, werden in eine Zuckerlösung gegeben, diese wird mit Sprühtrocknung verfestigt. Die entstehenden halbfesten, sphärischen Teilchen mit einem Wassergehalt zwischen 10% und 20% werden getrocknet, wobei sie zu grösseren Teilchen mit Durchmessern von ca. 400 $\mu$m agglomerieren.

Die Druckschrift US 5,123,162 zeigt sprühtrocknungsfixierte Aromastoffe in einem Kohlenwasserstoffsubstrat.

In einem amorphen Zuckersubstrat aus Mono- und Disacchariden sind Aromastoffe oder Fruchtteilchen eingebettet. Damit die Teilchen stabil sind, enthält die Matrix ein hochmolekulargewichtiges Filmformmaterial, beispielsweise ein Gummi oder eine chemisch modifizierte Stärke.

Die Druckschrift EP 1 304 044 betrifft von Hydroxypropylcellulose eingekapseltes Material. Die Druckschrift offenbart Teilchen, wobei Aromen in einer amorphen oder teilweise kristallinen Matrix eingebettet sind. Die Matrix enthält ausser Hydroxypropylcellulose zum Beispiel Zucker.

Die Druckschrift WO 99/07901 betrifft mesomorphe Zuckerpartikel. Mit einem sogenannten "Liquiflash" Verfahren werden in einer Zentrifuge amorphe Zuckerkugeln hergestellt, in welche Additive, wie Aromen, Nahrungsmittel oder Kakao, eingebettet sind. Die Sphären werden nachkristallisiert und zerkleinert, sodass Mikrokristallite mit Durchmessern unter 10pm entstehen. Fondantkompositionen mit diesen kleinen Teilchen vermitteln den Geschmack und das Mundgefühl einer fettreichen Masse.

Die Druckschrift US 5,637,344 betrifft Zuckerartikel mit Schokoladengeschmack. In einer amorphen Zuckermasse sind Kakaopulverteilchen eingebettet, die einem sogenannten "air-jet milling" Verfahren unterzogen wurden, bei dem abgerundete Teilchen mit Durchmessern kleiner 15pm entstehen. Diese kleinen, abgerundeten Teilchen erzeugen im Gegensatz zu herkömmlich gemahlenem Kakaopulver keinen rauen, sandartigen Geschmack auf der Zunge.

Die Druckschrift US 3,472,658 betrifft eine leicht benetzbare Zuckerzusammensetzung. Ein Zuckerpartikel ist von einer Kakaoschicht umgeben, die wiederrum mit amorphem Zucker beschichtet ist. Die Teilchen können einen Teilchendurchmesser in etwa zwischen 150$\mu$m und 1mm aufweisen.

Es ist die Aufgabe der vorliegenden Erfindung, Ausgangsmaterialien, Lebensmittelsuspensionen und/oder Verzehrmassen bereitzustellen, welche die Nachteile des Bekannten überwinden und mit welchen ein deutlich kalorienreduziertes Lebensmittelprodukt herstellbar ist, das hohen sensorischen Anforderungen hinsichtlich Konsistenz, Textur, Geschmack und Stabilität genügt, sowie entsprechende Verfahren zur Herstellung, die einen reduzierten Energiebedarf aufweisen.

Die Aufgabe wird gelöst durch ein sphärisches Partikel zur Herstellung eines Lebensmittelprodukts, wobei das Partikel ein Matrixmaterial aus amorph verfestigtem Biopolymer enthält, wobei das Matrixmaterial einen Wassergehalt aufweist, der derart gewählt ist, dass insbesondere die Glasumwandlungstemperatur des Matrixmaterials oberhalb der typischen oder beabsichtigten Lager-, Verzehr- und/oder Verarbeitungstemperatur liegt, insbesondere die Glasumwandlungstemperatur grösser gleich 25°C ist, und wobei der Wassergehalt des Matrixmaterials kleiner als 10 Gewichts-% (Gleichgewichtsfeuchte im Matrixmaterial bei 20°C und 1023 hPa) ist.

Unter einem Matrixmaterial wird in der vorliegenden Anmeldung eine Grundsubstanz verstanden, in welcher andere Bestandteile, bevorzugt vereinzelt und/oder portioniert und bevorzugt im Wesentlichen gleichmässig verteilt, eingebettet sein können.

Mit der Glasumwandlungstemperatur ist die mittels der später detaillierter beschriebenen Dynamischen Differenzkalorimetrie (DSC) bestimmte Glasumwandlungstemperatur gemeint.

Bei dem Biopolymer kann es sich beispielsweise um eine Stärke, um Proteine, um mikrokristalline Cellulose oder ein Polyglycerinester (PGE) handeln. Insbesondere handelt es sich bei dem Biopolymer um einen Zucker oder eine Zucker/Polysaccharid-Mischung, z.B. eine Mischung aus Zuckern mit Stärken, gegebenenfalls teilweise abgebauten Stärken, oder das Biopolymer enthält einen Zucker oder eine Zucker/Polysaccharid-Mischung.

Bevorzugt enthält das Matrixmaterial amorph verfestigte Zucker, weiter bevorzugt Zucker mit einem Dextroseäquivalent von grösser 20 oder besteht daraus.

Das Matrixmaterial kann eine Mischung von Zuckern mit unterschiedlichen Dextroseäquivalenten enthalten oder daraus bestehen, wobei sich insgesamt ein Dextroseäquivalent von über 20 bilden kann.

Insbesondere enthält das Matrixmaterial keine Zellulose oder Derivative davon.

Insbesondere sind in das Matrixmaterial Feststoffteilchen und/oder Flüssigkeits- und/oder Gasvolumina eingebettet. Diese Partikel mit Einbettungen werden im Folgenden auch Komposite-Partikel genannt.

Der Wassergehalt des Matrixmaterials entspricht dem Gleichgewichtswassergehalt des sphärischen Partikels. Dieser Wassergehalt ist bestimmend für die thermo-mechanischen Eigenschaften des Partikels und beeinflusst dessen Glasumwandlungstemperatur signifikant. Das sphärische Partikel kann Bestandteile aufweisen, die in das Matrixmaterial eingebettet sind, welche enkapsuliertes Wasser enthalten. Dieses trägt nicht zum Gleichgewichtswassergehalt des Partikels bei, da es eingeschlossen ist und nicht in das Matrixmaterial diffundieren kann.

Der Wassergehalt kann mit Titration oder über die Ermittlung der Glasübergangstemperatur, beispielsweise mit der Dynamisch Mechanischen Analyse (DMA) oder mit Dynamischer Differenzkalorimetrie (DSC), bestimmt werden.

Unter sphärischen Partikeln werden in der vorliegenden Anmeldung Körper bezeichnet, von denen mehr als 70% der Oberfläche konvex gekrümmt ist, das heisst, weniger als 30% der Oberfläche ist aus ebenen Teilflächen gebildet.

Die sphärischen Partikel haben eine Sphärizität $\Psi$ von grösser als 0.5, bevorzug grösser als 0.8, weiter bevorzugt grösser als 0.9. Unter Sphärizität $\Psi$ wird das Verhältnis der Oberfläche einer Kugel mit demselben Volumen wie der gegebene Partikel und der Oberfläche des Partikels verstanden:

$$\Psi = \frac{\pi^{\frac{1}{3}}\left(6V_p\right)^{\frac{2}{3}}}{A_p}$$

wobei $V_P$ das Partikelvolumen s und $A_P$ die Partikeloberfläche bezeichnen. Hat der Partikel die Form einer Kugel, ergibt sich eine Sphärizität von 1.

Es hat sich herausgestellt, das sphärische Partikel besonders gut geeignet sind, in einer Lebensmittelsuspension oder einer Verzehrmasse für eine hohe sensorische Qualität zu sorgen. Kantige Partikel müssen kleiner sein und homogener verteilt vorliegen, um eine vergleichbar gute sensorische Qualität im Hinblick auf die empfundene Rauigkeit, die Viskosität und/oder Konsistenz zu generieren.

Sphärische Partikel können mit grösseren Durchmessern als gebrochene oder kantige Teilchen in einer Verzehrmasse vorliegen und zu derselben sensorischen Qualität führen.

Der amorphe Zustand sorgt dafür, dass an der Oberfläche der Partikel keine Kristallflächen mit Kanten vorliegen.

Der Wassergehalt ist so festgelegt, dass das amorph verfestigte Biopolymer unter definiert gewählten Lagerbedingungen nicht nachkristallisiert.

Ein erfindungsgemäss eingestellter, hinreichend niedriger Gleichgewichtswassergehalt im Matrixmaterial von zum Beispiel kleiner als 10 Gewichts-% stellt sicher, dass es unter den typischen und/oder beabsichtigten Verwendungs-, Lagerungs- oder Verzehrtemperaturen nicht zu einem Nachkristallisieren und damit zur Ausbildung von kantigen Oberflächenstrukturen kommt, da die Glasumwandlungstemperatur so eingestellt ist, dass sie in für die Kristallisation relevanten Zeiträumen nicht überschritten wird.

Solche Zeiträume können beispielsweise je nach Stoffsystem und Temperaturunterschied zwischen der aktuellen Temperatur der amorphen Matrix und der Glasumwandlungstemperatur mehrere Stunden betragen.

Es hat sich gezeigt, dass neben einem möglichen Nachkristallisieren auch die Aufweichung des Matrixmaterials, insbesondere an der Partikeloberfläche, entscheidend ist für die Wechselwirkung der Partikel untereinander.

Die Klebrigkeit der Oberfläche wird beeinflusst durch den Wassergehalt, die Wasseraktivität, die Temperatur an der Oberfläche des Partikels und die Glasumwandlungstemperatur, sowie der chemischen Zusammensetzung des Partikels.

In rheologischen Messungen für Mischungen aus Partikeln, die amorphes Matrixmaterial aufweisen, und Triglyceriden wurde gefunden, dass die Viskosität als Funktion der Temperatur zunächst abnimmt und bei Überschreiten einer gewissen kritischen Temperatur wieder zunimmt. Diese kritische Temperatur kann mit der Glasumwandlungstemperatur in Beziehung gesetzt werden und wird als rheologisch charakterisierte Glasumwandlungstemperatur bezeichnet ($T_{g,rhe}$). Diese ist ca. 10-20°C höher, als die mittels DSC bestimmte Glasumwandlungstemperatur.

Für die Klebrigkeit ist die an der Oberfläche herrschende Temperatur entscheidend. Unter isothermen Gleichgewichtsbedingungen ist die Temperatur der Oberfläche gleich der Temperatur des Partikelkerns. Unter Berücksichtigung von Nichtgleichgewichtszuständen, kann infolge Reibung die Oberflächentemperatur aber höher sein als die Kerntemperatur des Partikels, so dass es zu Klebrigkeit an der Oberfläche kommen kann, obwohl die mittlere Temperatur des Partikels noch nicht die kritische Temperatur $T_{g,rhe}$ erreicht hat.

Dem Nachkristallisieren wie auch der Klebrigkeit wird in einer bevorzugten Ausführungsform der Erfindung auch durch einen hinreichenden Anteil, bevorzugt mindestens 10 Gewichts-%, an langkettigen Biopolymere, zum Beispiel eine Dextrose/Saccharose-Gemisch mit einem Dextroseäquivalent DE 19, entgegengewirkt.

Hier und im Folgenden wird unter einer Dextrose eine Mischung aus Mono- und Polysacchariden verstanden. Polysaccharide sind Moleküle, die aus mindestens zwei Monosacchariden bestehen.

Eine Saccharose oder Sucrose enthält je ein Molekül Glucose und Fructose.

So besitzen Dextrose/Saccharose-Gemische bei gleichem Wassergehalt eine umso höhere Glasübergangstemperatur $T_g$, je niedriger das Dextroseäquivalent des jeweiligen Dextroseanteils ist, je grösser der Anteil der Oligosaccharid-Moleküle ist und je grösser die Kettenlängen der Oligosaccharid-Moleküle sind.

In Anwendungsbeispielen wurde gefunden, dass für Gehalte von mind. 15 Gewichts-% von DE19 oder aber mind. 30 Gewichts-% von DE43, bezogen auf die wasserfreie Zuckerphase oder Biopolymerphase, die Glasübergangstemperatur $T_g$ hinreichend hoch ist, um Wassergehalte von bis zu 10 Gewichts-% zu stabilisieren. Bevorzugt besitzt das Matrixmaterial des sphärischen Partikels eine Glasübergangstemperatur von grösser als 30°C, bevorzugt zwischen 30°C und 40°C, besonders bevorzugt grösser als 40°C. Die Partikel sind somit bei Temperaturen von bis zu der Glasumwandlungstemperatur, also bei Temperaturen von bis zu mindestens 30°C stabil weiterverwendbar und/oder lagerbar, insbesondere als Bestandteil einer Lebensmittelsuspension oder Verzehrmasse.

Die in dem Matrixmaterial vorliegenden Einbettungen erlauben, die sphärischen Partikel mit geeigneten Ingredienzen zu kombinieren und so direkt ein Komposite-Pulver zu erhalten, das zum Beispiel in eine kontinuierliche Fluidphase eingemischt werden kann. Auf diese Weise kann eine fliessfähige Lebensmittelsuspension erhalten werden.

Die Grösse, die Geschmackseigenschaften und/oder der Nährstoffgehalt der sphärischen Partikel können gezielt eingestellt werden. Damit wird ein Komposite-Pulver zur Verfügung gestellt, mit dem eine Lebensmittelsuspension und/oder eine Verzehrmasse herstellbar ist, die eine definierte sensorische Qualität aufweist und die beispielsweise gleichzeitig kalorienreduziert und/oder angereichert mit geschmacksgebenden und/oder nutritiven Komponenten ist.

Bevorzugt besteht das sphärische Partikel zu mindestens 5 Volumen-%, weiter bevorzugt zu mindestens 10 Volumen-%, weiter bevorzugt zu mindestens 30 Volumen-%, weiter bevorzugt zu mindestens 50 Volumen-% aus Matrixmaterial.

Bevorzugt besteht das sphärische Partikel zu mindestens 50 Gewichts-%, weiter bevorzugt zu mindestens 60 Gewichts-% aus Matrixmaterial.

Auf diese Weise können die Einbettungen vollständig innerhalb des Matrixmaterials liegen und beeinträchtigen nicht die Oberfläche oder die Oberflächenstruktur des sphärischen Partikels.

Die Einbettungen liegen bevorzugt fein verteilt in dem Matrixmaterial vor und haben insbesondere eine maximale Erstreckung in einer Raumrichtung von bis zu 30 μm.

Bevorzugt enthält das sphärische Partikel mindestens 0.1 Gewichts-% an Einbettungen und/oder mindestens 0.1 Volumen-% an Einbettungen.

Bevorzugt enthält das sphärische Partikel maximal 60 Gewichts-% und/oder maximal 60 Volumen-% an festen, flüssigen oder gasförmigen Einbettungen bei Raumtemperatur.

Das sphärische Partikel weist bevorzugt einen Durchmesser von kleiner als 500 μm auf, weitergehend bevorzugt kleiner als 100 μm und noch weitergehend bevorzugt kleiner 50 μm. Sphärische Partikel dieser Grösse lassen sich gut mit anderen Massen mischen, insbesondere in Fluide einmischen.

In einer vorteilhaften Ausführung der Erfindung weist das Matrixmaterial eine Wasseraktivität von unter 0.7, insbesondere von unter 0.6 und bevorzugt von unter 0.55, insbesondere zwischen 0.05 und 0.45, auf. Als Wasseraktivität ist hier der Quotient aus Partialdampfdruck und Sättigungsdampfdruck bei Zimmertemperatur (20°C) und Normaldruck (1023 hPa) definiert. Die Wasseraktivität ist ein Mass für frei verfügbares Wasser in einem Material. Nur dieser Anteil beteiligt sich aktiv am Austausch mit der Umgebung und ist zum Beispiel in Bezug auf die mikrobiologische Haltbarkeit von grosser Bedeutung. Gleichzeitig nimmt die Wasseraktivität aber auch wesentlichen Einfluss auf das chemische Verhalten von Lebensmitteln.

Sphärische Partikel mit einer derartigen Wasseraktivität zeigen unter Berücksichtigung zugeordneter Glasumwandlungstemperaturen keine signifikanten Nachkristallisationseffekte oder Klebrigkeitseffekte, insbesondere, wenn sich die Lagertemperatur unter dem Wert der Glasumwandlungstemperatur und die relative Lagerluftfeuchte im Falle eines unverpackten Produktes nahe oder unterhalb der Wasseraktivität befinden.

In einer vorteilhaften Ausführung der Erfindung enthält das Biopolymer des sphärischen Partikels mindestens einen Zucker aus der folgenden Gruppe oder besteht daraus: ein Zucker mit Dextroseäquivalent von grösser als 20, Saccharose oder Sucrose, Dextrose, Polydextrose, Maltodextrin, Mannose, Rhamnose, Maltose, Laktose, Fructose, Polyfructose, Lactiolisomalt, Tagatose, Saccharin, Aspartam, Acesulfam, Cyclamat, Neohesperidin, Neotam, Sucralose, Steviosid, Thaumatin oder Zuckeralkohole, wie zum Beispiel Sorbit, Xylit, Mannit, Maltit, Erythrit oder Isomalt, und/oder Kombinationen dieser.

Vorteilhafterweise enthält das Matrixmaterial Zucker mit Dextroseäquivalent von grösser als 20 oder besteht daraus.

Bevorzugt sind in das Matrixmaterial des sphärischen Partikels Kakaobestandteile, Milchbestandteile, Fette, Aromastoffe und/oder nutritive Komponenten, z.B. Vitamine oder Polyphenole eingebettet.

Unter einem Kakaobestandteil werden das aus der Kakaobohne oder Teilen der Kakaobohne gewonnene Fett, Kakaopulver oder Kakao, also ein Erzeugnis aus zu Pulver verarbeiteten, gereinigten, geschälten und gerösteten Kakaobohnen, das mindestens 20% Kakaobutter, auf das Gewicht der Trockenmasse bezogen und höchstens 9% Wasser enthält, fettarmes oder mageres Kakaopulver, fettarmer oder magerer Kakao, stark entöltes Kakaopulver, stark entölter Kakao, also Kakaopulver mit weniger als 20% Kakaobutter, auf das Gewicht der Trockenmasse bezogen, und ausserdem Kakaofaserstoffe gewonnen aus Kakaoschalen verstanden.

Unter einem Fett wird in der vorliegenden Anmeldung eine Komponente verstanden, die gewählt ist aus der folgenden Gruppe: pflanzliche Fette, insbesondere Kakaobutter oder Anteile von Kakaobutter, tierische Fette, insbesondere Milchfett oder Anteile von Milchfetten, künstliche Fette, Kakaobuttersubstitute, Kakaobutterersatzfette, Kakaobutteräquivalente gemäss Richtlinie 2000/36/EG, Anhang II.

Unter einem Milchbestandteil wird in der vorliegenden Anmeldung eine Komponente verstanden, die aus Milch gewonnen wurde, insbesondere eine Milchtrockenmasse aus teilweise oder vollständig dehydratisierter Vollmilch, teil- oder vollentrahmter Milch, laktosefreier oder laktosereduzierter Milch, Sahne, teilweise oder vollständig dehydratisierter Sahne, laktosefreier oder laktosereduzierter Sahne, Butter oder Milchfett, zum Beispiel ein Milchpulver.

Bevorzugt werden wesentliche Bestandteile, insbesondere Nichtfettbestandteile, eines typischen Schokoladenprodukts und/oder einer typischen Schokoladenproduktfüllung, gemäss Richtlinie 2000/36/EG, Anhang I, in das sphärische Partikel inkorporiert.

Zusätzlich oder alternativ kann das sphärische Komposite-Partikel eine oder mehrere der folgenden Komponenten enthalten: Vitamine, Mineralien, Strukturbildner, diätische oder nicht-diätische Fasern, Fruchtstücke, Gemüsestücke, Nusstücke, Fruchtkernstücke, Fleischstücke, Fischstücke, Stücke von Krustentieren, Kakaoteilchen, Kakaobestandteile, Milch, Milchbestandteile, Fruchtsaft oder Fruchtpüree, Gemüsesaft oder Gemüsepüree, Kaffeeextrakt oder Kaffeearoma, Teeextrakt oder Teearoma, Kakaoextrakt oder Kakaoaroma, Farbstoffe, Farbstoffextrakte, synthetische Süssstoffe, Gewürze, künstliche Aromen, und naturidentische Aromen, pharmazeutisch wirksame Stoffe, und andere ernährungsphysiologisch bedeutsame Stoffe.

Es können dem sphärischen Komposite-Partikel also Bestandteile zugegeben sein, die dem späteren Verzehrprodukt eine ganz bestimmte Geschmacksrichtung geben und/oder bestimmte Funktionalitäten verleihen.

In einer vorteilhaften Ausführung der Erfindung besitzt das Partikel eine Dichte zwischen 0,1 und 2,5 g/cm$^3$. Die Einstellung der Dichte des sphärischen Partikels, insbesondere eines geringen Dichtewerts, kann über die Inkorporation von Gasbläschen oder Schaum in das Matrixmaterial eingestellt werden. Hohe Dichtewerte resultieren bei Inkorporation mineralischer Komponenten.

Die Dichte kann mit einem klassischen Pyknometer gemessen werden, bei welchem beispielsweise Hydriol.SOD24, ein Dodecyl Oleat ($C_{30}H_{58}O_2$), verwendet wird. Alternativ kann ein Helium-Pyknometer verwendet werden, das für die erfindungsgemässen Partikel dieselben Dichtewerte liefert.

Die Aufgabe wird weiterhin gelöst durch ein Agglomerat aus sphärischen Partikeln wie sie oben beschrieben sind, dessen Grösse, Form und Porosität kontrolliert ist.

Das erfindungsgemässe Agglomerat ist selbst ein sphärisches Partikel mit einer gerundeten Oberfläche, die sich aus den Oberflächen einzelner sphärischer Partikeln zusammensetzt und insgesamt zu mehr als 70% aus konvexen Teilflächen gebildet ist. Das Agglomerat besitzt eine Sphärizität von grösser als 0.5, bevorzugt von grösser als 0.8.

Die Porosität, also der Hohlraumvolumenanteil, des erfindungsgemässen sphärischen Partikelagglomerats ist bevorzugt kleiner als 40%, besonders bevorzugt kleiner als 25%.

Die bevorzugten Durchmesser- und Formkriterien der erfindungsgemässen Agglomerate aus sphärischen Partikeln entsprechen somit im Wesentlichen den für die Einzelpartikel vorab beschriebenen.

Bevorzugt besteht ein Agglomerat aus weniger als 20 sphärischen Partikeln.

Die der Erfindung zugrunde liegende Aufgabe wird weiterhin gelöst durch ein Verfahren zum Herstellen von sphärischen Partikeln, wie sie oben beschrieben wurden, oder Agglomeraten, wie sie oben beschrieben wurden.

Dazu erfolgt in einem ersten Schritt zunächst die Bereitstellung einer Biopolymerlösung, beispielsweise durch, bevorzugt vollständige, Lösung der Bestandteile eines Biopolymers, insbesondere von Zuckerkomponenten, bevorzugt mit einem Dextroseäquivalent von grösser 20, und gegebenenfalls zusätzlichen funktionalisierenden Stoffkomponenten, wie zum Beispiel grenzflächenaktive Substanzen, in einer, bevorzugt wässerigen, Fluidphase. Die wässrige Fluidphase kann nur aus Wasser bestehen. Sie kann aber auch Milch, Milchbestandteile, Fruchtsaft, Gemüsesaft, Kaffee, Kaffeeextrakte, Tee und/oder Teeextrakte enthalten. Die wässrige Fluidphase muss gut homogenisiert werden.

Die Biopolymerlösung wird bevorzugt so zusammengestellt, dass sich in dem anschliessenden Formgebungs- und Vereinzelungsprozess ein Matrixmaterial bildet, welches amorph verfestigte Zucker mit einem Dextroseäquivalent von grösser 20 enthält oder besteht daraus.

Alternativ kann auch mit flüssigen Lösungen von Zuckern, wie beispielsweise Glucosesirup oder Zuckermelasse gearbeitet werden, die dann auf den für den Sprühprozess notwendigen Trockenmassegehalt, z.B. durch Verdünnung mit Wasser, eingestellt werden.

Der erste Schritt erfolgt beispielsweise in einem temperierten Mischbehälter.

In einem zweiten optionalen Schritt werden Feststoffteilchen und/oder Flüssigkeits- und/oder Gasvolumina der Lösung hinzugefügt. Optional wird ein Emulgator zur Verbesserung der Dispergierqualität zugegeben.

Optional kann die Flüssigkeit zudem belüftet werden, also ein Gas und/oder ein Schaumbildner, wie PGE oder Milchproteine, eingeleitet werden, so dass ein Schaum entstehen kann.

Der zweite Schritt wird zum Beispiel in einer Membran-Emulgier/Schäumvorrichtung und/oder in einem Drehmomentkontrollierten Rotor/Stator-Dispergierer vorgenommen.

In einem dritten Schritt wird ein Formgebungs- und Vereinzelungsprozess, insbesondere ein Tropfenbildungsprozess, durchgeführt. Bevorzugt erfolgt ein druck- und temperaturkontrolliertes Sprühtrocknen der im zweiten Schritt erstellten wässrigen Mischung oder Dispersion. Der Tropfenbildungsprozess kann in einem Sprühprozess mit Ein- oder Mehrstoffdüsen oder alternativ durch Emulgieren oder mittels einer Drehscheibe erfolgen.

Tropfen von wässriger Lösung in Öl können auch mittels einer Ein- oder Mehrstoffdüse gebildet werden, bei der ähnlich wie bei einem Sprühtrocknungsprozess eine Druckentspannung einer wässriger Phase erfolgt, allerdings nicht zusammen mit einem Gas, sondern zusammen mit einer Ölphase.

Die Sprühdruckkontrolle berücksichtigt den Differenzdruck in der Sprühdüse. Dieser ist proportional zur übertragenen Schubspannung, für welche ein kritischer Wert zur Erhaltung der im zweiten Schritt erzeugten wässrigen Mischung oder Dispersionsstruktur nicht überschritten werden darf.

Die Temperaturkontrolle stellt sicher, dass der Sprühprozess hinreichend oberhalb der Glasumwandlungstemperatur der kontinuierlichen wässrigen Mischung, welche das Matrixmaterial des Partikels bildet, erfolgt, um einen hinreichend vollständigen Aufbruch des Sprühstrahls und somit die Ausbildung kleiner, runder Sprühteilchen sowie danach deren Verfestigung durch Trocknung zu erzielen.

Beim Sprühtrocken der im ersten und/oder zweiten Schritt gebildeten wässrigen kontinuierlichen Phase oder Dispersion werden der Restwassergehalt, die Wasseraktivität und/oder die Teilchengrösse über den Sprühdruck, den Zerstäubungsdruck, den Durchsatzvolumenstrom, den Massenstrom der Dispersion, den Gasvolumenstrom, die Temperatur der Dispersion, die Gastemperatur und den Druck und der Temperatur in der Sprühkammer eingestellt.

Die erfindungsgemäss hinreichend schnelle Trocknung und die eingestellte langsame Kristallisationskinetik des Biompolymers lässt die vormals wässrige Fluidphase (Dispersion) in einem stabilen, amorphen Zustand verfestigen, ohne dass es zu signifikanter Nachkristallisation kommt.

Der dritte Schritt kann in einem Sprühtrockner mit Sprüh-Differenzdruck-Regelung und Temperatur-/Feuchtigkeitskontrolle der Trocknungsluft erfolgen.

Bevorzugt erfolgt eine schubspannungskontrollierte Behandlung durch Steuerung oder Regelung des Fluid-Differenzdruckes bei Einstoffdüsen oder der Gas-/Fluid-Druckdifferenz bei Zweistoffdüsen über der Sprühdüse als Stellgrösse unter Konstanthaltung der dispersen Strukturkenngrössen.

Die Teilchen, die frei fliessend sein können, können gesammelt, gelagert und/oder weiterverarbeitet werden.

Die Lagerbedingungen werden abgestimmt auf die Zusammensetzung der Partikel gewählt. Weisen die Partikel einer Wasseraktivität von unter 0.3 oder einen Gleichgewichtswassergehalt der Matrix von kleiner 10 Gewichts-% auf, so sind die Partikel bei Zimmertemperatur und Normaldruck stabil. Bei Partikeln mit einer höheren Wasseraktivität und zum längerfristigen Stabilisieren der Partikel kann die Lagertemperatur erniedrigt werden, der Lagerdruck erhöht werden, eine Luftentfeuchtung, eine Nachtrocknung, ein Hinzufügung von Trockenmittel und/oder eine Lagerung in einer luft- und/oder feuchtigkeitsdichten Verpackung erfolgen.

Bevorzugt werden die Partikel bei einer relativen Feuchte (Quotient aus Dampfdruck und Sättigungsdampfdruck über Wasser, bei Luft entspricht dies der relativen Luftfeuchtigkeit) von kleiner als 0.4 und bei Temperaturen von kleiner als 30°C, bevorzugt bei einer relativen Feuchte von kleiner als 0.33 und/oder bevorzugt bei Zimmertemperatur, z.B. 20°C, gelagert.

Die Partikel können zum Beispiel in einem Silo oder/oder in einem luft- und/oder feuchtedichten Beutel gelagert werden.

Die der Erfindung zugrunde liegende Aufgabe wird ausserdem gelöst durch eine Lebensmittelsuspension, wobei die Lebensmittelsuspension ein im Wesentlichen homogenes Trägermaterial enthält, in welches sphärische Partikel eingebettet sind. Das Trägermaterial kann fest oder flüssig sein. Es kann in pastöser Form vorliegen, sowie giessbar und/oder formbar sein.

Bevorzugt besteht die Lebensmittelsuspension im Wesentlichen aus dem Trägermaterial und darin eingebetteten sphärischen Partikeln.

Bei einer Lebensmittelsuspension handelt es sich im Rahmen der vorliegenden Anmeldung um ein Halbfertigprodukt, das zu einem Verzehrprodukt oder Endprodukt, gegebenenfalls auch als Teilkomponente, zum Beispiel als Füllung, weiterverarbeitet werden kann.

Bei den sphärischen Partikeln handelt es sich insbesondere um sphärische Partikel wie oben beschrieben und/oder Agglomerate wie oben beschrieben. Erfindungsgemäss enthalten die sphärischen Partikel ein Matrixmaterial aus einem amorph verfestigten Biopolymer, zum Beispiel einem Protein, insbesondere einem Molkeprotein. Bevorzugt handelt es sich bei dem Biopolymer um einen Zucker, weiter bevorzugt um einen Zucker mit Dextroseäquivalent von grösser als 20.

Vorteilhafterweise enthält das Matrixmaterial Zucker mit einem Dextroseäquivalent von grösser als 20 oder besteht daraus.

In einer vorteilhaften Ausführung der Erfindung bestehen die sphärischen Partikel aus amorph verfestigtem Zucker mit einem Dextroseäquivalent von grösser als 20.

Die sphärischen Partikel, insbesondere wie oben beschriebene Komposite-Partikel, sind bevorzugt in einem fettkontinuierlichen Fluid suspendiert. Bevorzugt eingesetzte Fette sind: Kakaobutter, Milchfett, weitere pflanzliche Fette, künstliche oder synthetische Fette, weitere tierische Fette, Kakaobuttersubstitute, Kakaobutterersatzfette, Kakaobutteräquivalente, gemäss Richtlinie 2000/36/EG, Anhang II.

Vorteilhafterweise enthält die Lebensmittelsuspension sphärische Partikel mit einem Anteil von grösser als 5 Volumen-%, bevorzugt grösser als 20 Volumen-% und weitergehend bevorzugt grösser als 35 Volumen-%. Bevorzugt ist der Volumenanteil der sphärischen Komposite-Partikel Fraktion zwischen 5 und 85 Volumen-%, weiter bevorzugt zwischen 20 und 80 Volumen-%, sowie weitergehend bevorzugt zwischen 35 und 75 Volumen-% eingestellt.

Bevorzugt liegen die sphärischen Partikel und die Trägermasse mit einem Gewichtsverhältnis zwischen 0,01:1 und 100:1 vor, bevorzugt zwischen 0,01:1 und 5:1.

Die Eigenschaften der Lebensmittelsuspension, insbesondere die sensorischen Eigenschaften, wie die Textur, die Konsistenz und der Geschmack, werden von den sphärischen Partikeln massgeblich festgelegt.

In einer vorteilhaften Ausführung weist das Matrixmaterial der Partikel eine Wasseraktivität von unter 0.7 insbesondere von unter 0.6 bevorzugt von unter 0.55, insbesondere unter 0.45, auf.

Bevorzugt weist das Matrixmaterial aus Biopolymer einen Wassergehalt von kleiner als 10 Gewichts-% (Gleichgewichtsfeuchte bei 20°C) auf.

Bevorzugt besteht das Biopolymer aus einem Zucker, weiter bevorzugt einem Zucker mit Dextroseäquivalent von grösser als 20, und/oder enthält mindestens einen Zucker aus der folgenden Gruppe: ein Zucker mit Dextroseäquivalent von grösser als 20, Saccharose oder Sucrose, Dextrose, Polydextrose, Maltodextrin, Mannose, Rhamnose, Maltose, Laktose, Fructose, Polyfructose, Lactiolisomalt, Tagatose, Saccharin, Aspartam, Acesulfam, Cyclamat, Neohesperidin, Neotam, Sucralose, Steviosid, Thaumatin oder Zuckeralkohole, wie zum Beispiel Sorbit, Xylit, Mannit, Maltit, Erythrit oder Isomalt, und/oder Kombinationen davon.

Bevorzugt sind in das Matrixmaterial der sphärischen Partikel Feststoffteilchen und/oder Flüssigkeits- und/oder Gasvolumina eingebettet.

Bevorzugt ist ein Bestandteil von Kakao, ein Milchbestandteil, ein Fett, ein Aromastoff, eine nutritiv relevante Zusatzkomponente oder eine Kombination davon in das Matrixmaterial des sphärischen Partikels eingebettet.

In einer vorteilhaften Ausführung der Erfindung haben mindestens 90% (bezogen auf das Volumen) der sphärischen Partikel eine Grösse von kleiner als 500 $\mu$m, bevorzugt kleiner als 100 $\mu$m, noch weitergehend bevorzugt kleiner als 50 $\mu$m. Bevorzugt haben mindestens 60% (bezogen auf das Volumen) der Partikel eine Durchmesser zwischen 2 $\mu$m und 40 $\mu$m, insbesondere sind 80% des Volumens der Partikel grösser als 1 $\mu$m.

Es hat sich gezeigt, dass es genügt, wenn in der Lebensmittelsuspension Partikel vorliegen, von denen mindestens 80% (bezogen auf das Volumen) grösser als 2 $\mu$m sind, die sphärisch sind und eine Matrixmaterial aus amorph verfestigtem Biomaterial enthalten. In einer besonderen Ausführung wurde gefunden, dass es für das Fliessverhalten vorteilhaft ist, wenn mindestens 50% (bezogen auf das Volumen) aller Partikel grösser als 5 $\mu$m und sphärisch sind und/oder mindestens 5% (bezogen auf das Volumen) aller Partikel grösser als 20 $\mu$m und sphärisch sind, insbesondere mindestens 3%, bevorzugt mindestens 10%, grösser als 30 $\mu$m sind.

Bevorzugt weist die Grössenverteilung der sphärischen Partikel ein Verteilungsbreite, beschrieben durch die Standardabweichung s = $(x_{90,3}-x_{10,3})/x_{50,3}$, von kleiner 20, bevorzugt kleiner 5 und weitergehend bevorzugt kleiner 3 auf.

In einer vorteilhaften Ausführung der Erfindung ist das Trägermaterial eine kontinuierliche W/O (Wasser in Öl) oder O/W/O-Emulsion mit dispersen Subphasenanteilen von 5-80 Volumen-%, bevorzugt 20-70 Volumen-%, und weitergehend bevorzugt von 30-60 Volumen-%.

Bevorzugt enthält die fettkontinuierliche Fluidphase disperse Subphasen, z.B. Wasser- und/oder innere Fetttropfen bei O/W/O Emulsionen, in welchen qualitätsbestimmende Stoffkomponenten zur Beeinflussung von Aroma und/oder Geschmack und/oder nutritivem Nutzen inkorporiert sind.

Besonders vorteilhaft ist das Trägermaterial eine fettkontinuierliche Phase, die Triglyceride enthält, welche in einem Temperaturbereich zwischen 20-40°C in definierten Anteilen auskristallisieren, insbesondere bei 20°C weitgehend kristallisiert sind. Eine Lebensmittelsuspension mit einem derartigen Trägermaterial ist zur Herstellung eines hochqualitativen Schokoladenprodukts und/oder einer Füllung für ein gefülltes Schokoladenprodukt geeignet.

In Abhängigkeit von dem Anteil Triglyceride wird unter Lagerungs- und/oder Verzehrtemperaturbedingungen ein fluides, halbfestes oder festes Produkt erhalten.

Besonders bevorzugt enthält das Trägermaterial Kakaobutter oder besteht daraus.

Vorteilhafterweise sind in das Trägermaterial ausser den sphärischen Partikeln weitere hydrophile oder hydrophobe Partikel, zum Beispiel Zuckerpartikel, insbesondere Zuckerkristalle, oder hochschmelzende Fettkristalle eingebettet.

Das Trägermaterial ist bevorzugt eine fettkontinuierliche Masse, und das Trägermaterial kann weitere Bestandteile enthalten, beispielsweise Vitamine, Mineralien, Strukturbildner, diätische oder nicht-diätische Fasern, Fruchtstücke, Gemüsestücke, Nusstücke, Fruchtkernstücke, Fleischstücke, Fischstücke, Krustentierstücke, Kakaoteilchen, Kakaobestandteile, Milch, Milchbestandteile, Fruchtsaft oder Fruchtpüree, Gemüsesaft oder Gemüsepüree, Kaffeeextrakt oder Kaffeearoma, Teeextrakt oder Teearoma, Kakaoextrakt oder Kakaoaroma, Farbstoff, Farbstoffextrakt, synthetische Süssstoffe, Gewürze, künstliche und/oder naturidentische Aromen, pharmazeutisch wirksame Stoffe, und andere ernährungsphysiologisch bedeutsame Stoffe. Die genannten Bestandteile können auch in das Matrixmaterial der sphärischen Partikel inkorporiert sein.

Bevorzugt ist die Masse und/oder Anzahl der eingebetteten Bestandteile, die nicht sphärisch sind, kleiner als die Masse und/oder Anzahl der sphärischen Partikel und/oder die mittlere Grösse der eingebetteten Bestandteile ist kleiner als die mittlere Grösse der sphärischen Partikel, so dass die sensorische Qualität nicht beeinträchtigt wird.

Die Dichte der Lebensmittelsuspension liegt zwischen 0.3 und 2 g/cm$^3$, bevorzugt zwischen 0.5 und 1.8 g/cm$^3$.

Die der Erfindung zugrunde liegende Aufgabe wird weiterhin gelöst durch ein Verfahren zur Herstellung einer Lebensmittelsuspension wie oben beschrieben mit den folgenden Verfahrensschritten.

Zunächst werden sphärische Partikel bereitgestellt, insbesondere sphärische Partikel wie oben beschrieben.

Die Partikel können mit einem Verfahren wie oben beschrieben hergestellt werden, wobei nur optional in einem zweiten Schritt Feststoffteilchen und/oder Flüssigkeit- und/oder Gasvolumina hinzugefügt werden.

Nachfolgend werden die sphärischen Partikel in ein Trägermaterial suspendiert.

Dazu erfolgt die homogene, bevorzugt schubspannungskontrollierte Einmischung von sphärischen Partikeln, bevorzugt von amorph verfestigten Komposite-Partikeln, in eine bevorzugt fettbasierte kontinuierliche Fluidphase. Diese kann einem reinen Fettsystem oder einer fettkontinuierlichen W/O- oder O/W/O-Emulsion entsprechen. Diese Suspension oder Suspensions-Emulsions-Mischung bildet die oben beschriebene erfindungsgemässe Lebensmittelsuspension oder Verzehrmasse in deren fluider bis halbfester Form.

Die schubspannungskontrollierte Einmischung kann durch geeignete Erfassung und Regelung der Prozessgrössen wie Drehmoment, Leistungseintrag, Drehzahl, Stromaufnahme, Quantität der zu verarbeitenden Produktcharge, Massenströme, Anzahl der zu mischenden Komponenten, Menge der zu mischenden Komponenten, zeitliche Abfolge der Zugabe der zu mischenden Komponenten erfolgen. Es kann dabei auf einzelne Prozessgrössen oder Kombinationen davon zurückgegriffen werden.

Die Dispergier-, Sprüh- und Mischprozesse werden bevorzugt schubspannungskontrolliert gesteuert bzw. geregelt, damit die Einstellung der Produktstruktur ohne Schädigung durch Überbeanspruchung in Folge Berücksichtigung kritischer Beanspruchungsgrenzen gewährleistet ist.

Die Einmischung erfolgt bevorzugt in einem drehmoment- und/oder leistungskontrollierten Mischer.

Die Steuerung bzw. Regelung der Rotationsgeschwindigkeit als Stellgrösse der rotierenden Dispergier- bzw. Mischwerkzeuge erfolgt unter Konstanthaltung eines definierten, aus struktureller Sicht unterkritischen Drehmomentes als Führungsgrösse und resultiert damit in einer Konstanthaltung der dispersen Strukturkenngrössen als Steuer-/Regelgrösse.

Zusätzlich können weitere Bestandteile in das Trägermaterial suspendiert werden. Dies kann vor oder nach Zugabe der sphärischen Partikel geschehen.

In einem nachfolgenden Schritt kann eine Vorkristallisation der fettkontinuierlichen Fluidphase der im vorangehenden Schritt erzeugten Dispersion durch (i) konventionelle Rührkristallisation bei Wechsel-Temperierung oder durch (ii) neuartige Impfkristallisation bei Einmischung massgeschneiderter Impfkristalle in Pulver- oder Suspensionsform erfolgen.

Die Vorkristallisation der reinen Fettphase oder Anteilen davon oder der fettkontinuierlichen Fluidphase oder Anteilen davon erfolgt zum Beispiel in einem Kaltsprühturm, in einem Impfkristallisator oder in einem klassischen Temperierschritt.

Abschliessend kann die vorkristallisierte Masse in eine Form gegossen und unter Kühlung und weitergehender Kristallisation der kontinuierlichen Fettphase weiter verfestigt werden.

Die geschieht bevorzugt in mit einer Giessmaschine und/oder in einem Kühltunnel.

Im Endzustand liegt ein suspensionsbasiertes Lebensmittelprodukt bei 20°C in fester bis weicher Konsistenz vor.

Gegebenenfalls kann in einem weiteren Schritt eine Endproduktlagerung bei einer Temperatur erfolgen, die kleiner ist als die Glasumwandlungstemperatur der inkorporierten amorph verfestigten sphärischen Partikel, insbesondere Komposite-Partikel, und die gleichzeitig im Bereich oder unterhalb der Schmelztemperatur der fettkontinuierlichen Phase ist, in welche die Partikeln eingemischt wurden bzw. im Endprodukt eingebettet vorliegen, sodass bis zu 100 Gewichts-% der fettkontinuierlichen Phase in fester Form vorliegt.

Die der Erfindung zugrunde liegende Aufgabe wird ausserdem gelöst durch eine Verzehrmasse, die ein Agglomerat aus Partikeln umfasst, wobei zumindest ein Teil der Partikel sphärische Partikel wie oben beschrieben sind, die ein Matrixmaterial aus einem amorph verfestigten Biopolymer mit einem Wassergehalt von kleiner als 10 Gewichts-%, insbesondere einem Zucker, bevorzugt mit einem Dextroseäquivalent von grösser als 20, enthalten oder daraus bestehen und wobei in das Matrixmaterial Feststoffteilchen und/oder Flüssigkeits- und/oder Gasvolumina eingebettet sind.

Die agglomerierten Partikel haften an ihren Oberflächen aneinander. Je nachdem, wie stark die Partikel aneinander haften, ist die Verzehrmasse noch fliessend, pastös oder fest.

Die Verzehrmasse enthält oder besteht gleichsam aus einer aus sphärischen und insbesondere auch noch weiteren Partikeln gesinterten Zusammensetzung.

Bevorzugt sind ein Teil der Partikel Fettpartikel. Die Fettpartikel bestehen bevorzugt aus Kakaobutter oder Kakaobutter mit einen Anteil von Milchfett oder einem anderen Fett, das bevorzugt bei Raumtemperatur (20°C) weitestgehend fest ist.

Die sphärischen Partikel liegen also nicht in einer homogenen Fettmasse vor, sondern sind von Fettpartikeln umgeben.

Es hat sich herausgestellt, dass auch diese Verzehrmasse zur Herstellung eines Lebensmittelprodukts geeignet ist und ebenfalls gute sensorische Eigenschaften aufweist.

Vorteilhafterweise enthalten die Fettpartikel Triglyceride, die bei 20° mindestens teilkristallisiert sind.

Bevorzugt ist das Verhältnis der Anzahl sphärischer Partikel zur Anzahl weiterer Partikel zwischen 0,1:1 und 100:1, bevorzugt zwischen 0,1:1 und 50:1, weiter bevorzugt zwischen 0,1:1 und 30:1.

Die Dichte der Verzehrmasse liegt bevorzugt zwischen 0.3 und 1.8 g/cm3.

Die der Erfindung zugrunde liegende Aufgabe wird ausserdem gelöst durch ein Verfahren zum Herstellen einer Verzehrmasse wie oben beschrieben mit den folgenden Verfahrensschritten.

Zunächst werden sphärische Partikel bereitgestellt, insbesondere mit einem Verfahren wie oben beschrieben, wobei nur optional in einem zweiten Schritt Feststoffteilchen und/oder Flüssigkeit- und/oder Gasvolumina hinzugefügt werden.

Des Weiteren werden weitere Partikel zur Verfügung gestellt, insbesondere Fettpartikel, insbesondere ein Fettpulver.

Ein derartiges Fettpulver wird bevorzugt durch Einsprühen einer vorkristallisierten fettkontinuierlichen Suspension oder Fettschmelze in eine kalte Atmosphäre, zum Beispiel in einem Kaltsprühturm erzeugt.

Dazu wird eine Fettmasse, insbesondere Kakaobutter oder Kakaobutter mit einen Anteil von Milchfett oder einem anderen Fett, zunächst geschmolzen und vortemperiert, so dass die Fettmasse bevorzugt Kristallkeime vom Typ der $\beta_V$-Kristalle und/oder $\beta_{VI}$-Kristalle enthält. Anschliessend erfolgt der Sprühprozess. Das resultierende Fettpulver ist frei fliessend und umfasst bevorzugt Teilchen mit einer Grösse von kleiner als 200 $\mu$m.

Die Fettpartikel werden insbesondere gleichzeitig mit den sphärischen Partikeln zur Verfügung gestellt.

Weiter insbesondere werden die weiteren Partikel in demselben Prozess hergestellt wie die sphärischen Partikel, zum Beispiel werden Zuckerlösung und Fettmasse, bevorzugt gleichzeitig, sprühgetrocknet.

Die sphärischen Partikel und die weiteren Partikel, insbesondere Fettpartikel, werden gemischt.

Die Formgebung des derartigen Pulvergemisches aus sphärischen Partikeln, insbesondere amorph verfestigten Komposite-Partikeln und Fettpartikeln, erfolgt durch Tablettieren oder Sintern unter Druckaufprägung und gegebenenfalls zusätzliche temporäre moderate Temperaturerhöhung, und/oder unter Hinzufügung von wässeriger Flüssigkeit und/oder unter Hinzufügung von Öl und/oder unter Hinzufügung von Emulsion.

Das volumenbezogene Mischungsverhältnis von sphärischen Partikeln, insbesondere amorph verfestigten Komposite Partikeln, und Fettpartikeln liegt zwischen 1:20 und 50:1, bevorzugt zwischen 1:10 und 20:1.

Das massenbezogene Mischungsverhältnis von sphärischen Partikeln, insbesondere amorph verfestigten Komposite-Partikeln, und Fettpartikeln liegt zwischen 1:10 und 100:1, bevorzugt zwischen 1:5 und 40:1.

Die Partikel werden bevorzugt unter einem Druck von grösser als 20 kPa, weiter bevorzugt grösser als 100 kPa und weitergehend bevorzugt grösser als 300 kPa, tablettiert oder gesintert und dabei in aller Regel in die Form eines Lebensmittelproduktes gebracht, zum Beispiel in eine Tafel- oder Riegelform.

Eine Lagerung des Lebensmittelprodukts kann erfolgen, wie vorab für das suspensionsbasierte Lebensmittelprodukt bereits ausgeführt.

Die Partikelmischung kann auch in eine Schale oder eine Hülse, hergestellt aus einer anderen Verzehrmasse gefüllt werden und somit ein Mehrkomponenten-Produkt hergestellt werden.

Die der Erfindung zugrunde liegende Aufgabe wird weiterhin durch ein Lebensmittelprodukt gelöst, insbesondere ein Schokoladenprodukt, das eine Lebensmittelsuspension und/oder eine Verzehrmasse, wie oben beschrieben, enthält.

Überraschenderweise lässt sich mit einem erfindungsgemässen Lebensmittelprodukt mit sphärischen, amorph verfestigten Partikeln, die insbesondere Zucker sowie Kakao- und Milchbestanteile enthalten, und Kakaobutter als umgebende fettkontinuierlicher Phase oder als weitere Partikelsorte, eine vergleichbare sensorische Qualität erzielen, wie mit ein herkömmliches Schokoladenprodukt, das weitestgehend nichtsphärischen, kantigen Partikeln enthält, wobei in dem erfindungsgemässen Lebensmittelprodukt signifikant grössere Partikel, die Zucker enthalten, und ein signifikant geringerer Kakaobuttergehalt vorliegen.

In einem herkömmlichen Schokoladenprodukt vorliegende Zuckerkristalle besitzen einen Durchmesser von etwa 1-25 $\mu$m. Insbesondere sind mindestens 80 Volumen-% der Zuckerkristalle grösser als 1$\mu$m und maximal 10 Volumen-% grösser als 25$\mu$m. Die Durchmesserangabe bezieht sich dabei auf eine mit Laserbeugungsspektroskopie ermittelte Teilchengrösse.

Eine vergleichbare sensorische Qualität, insbesondere hinsichtlich der empfundenen Rauigkeit, kann mit einem Verzehrprodukt realisiert werden, bei dem die Verzehrmasse sphärische Partikel enthält, von denen mindestens 10 Volumen-% einen Durchmesser aufweisen, der grösser als 25$\mu$m ist, insbesondere grösser als 30$\mu$m, weiter insbesondere grösser als 35$\mu$m, weiter insbesondere grösser als 40$\mu$m.

Gleichzeitig wirkt sich die Verwendung dieser grösseren, sphärischen Partikel deutlich vorteilhaft hinsichtlich einer stark erniedrigten Viskosität bei gleichem Feststoffvolumenanteil aus.

Es hat sich gezeigt, dass für sphärische Komposite-Partikel, die in einer bevorzugt fettkontinuierlichen Fluidphase dispergiert vorliegen, die rheologischen Eigenschaften beschrieben über die Viskositätsfunktion $\eta(\dot{\gamma})$ und die Fliessgrenze $\tau_0$ deutlich reduzierte Werte dieser Materialfunktionen aufzeigen gegenüber Suspensionen gleicher Zusammensetzung, in welchen die in den sphärischen Partikeln enthaltenen Komponenten in kantiger, also nicht erfindungsgemäss sphärischer Partikelform, und separat, jedoch mit gleicher oder zumindest vergleichbarer Partikelgrössenverteilung vorliegen.

Beispielsweise liegen die sphärischen Komposite-Partikel in einer bevorzugt fettkontinuierlichen Fluidphase dispergiert vor, wobei für eine schokoladentypische Rezeptur, mit 0.5 Gewichts-% Lecithin (Menge des Emulgators bezogen auf die Emulgatormenge und die Menge an Fettphase) als Emulgator und Feststoffvolumenkonzentration von 55 Volumen-%, die Viskosität bei anwendungsrelevanter, definierter Schergeschwindigkeit von 10 s$^{-1}$ um einen Faktor grösser als 1.5, bevorzugt grösser als 2.5, und weitergehend bevorzugt grösser als 4 erniedrigt ist für das erfindungsgemässe Suspensionssystem, gegenüber einer Suspension gleicher Zusammensetzung, in welcher die in den sphärischen Partikeln enthaltenen Komponenten in kantiger, also nicht erfindungsgemäss sphärischer Partikelform und separat, jedoch mit gleicher oder zumindest vergleichbarer Partikelgrössenverteilung vorliegen.

In analoger Weise ergibt sich, dass für sphärische Komposite-Partikel, die in einer bevorzugt fettkontinuierlichen Fluidphase mit einer schokoladentypischen Feststoffvolumenkonzentration von 55 Volumen-% dispergiert vorliegen, die Fliessgrenze $\tau_0$ ohne Zusatz von Emulgator um einen Faktor von grösser als 1.5, bevorzugt um den Faktor von grösser als 5, und weitergehend bevorzugt um den Faktor von grösser als 10 für das erfindungsgemässe Suspensionssystem erniedrigt ist, gegenüber einer Suspension gleicher Zusammensetzung, in welcher die in den sphärischen Partikeln enthaltenen Komponenten in kantiger, also nicht erfindungsgemäss sphärischer Partikelform, Form und separat, jedoch mit gleicher oder zumindest vergleichbarer Partikelgrössenverteilung, vorliegen.

Dies wiederum lässt sich unter Einstellung der Viskosität vergleichbar zu herkömmlichen Schokoladenprodukten in Form einer massiven Reduktion kontinuierlicher Fettphase, zum Beispiel Kakaobutter, nutzen. Ein geringerer Anteil der kontinuierlichen Fettphase am Lebensmittelprodukt hat eine entsprechend verringerte Energiedichte, also eine Kalorienreduktion, zur Folge.

Überraschenderweise hat sich für Lebensmittelsuspensionen mit erfindungsgemässen sphärischen Partikeln ferner gezeigt, dass der Einsatz von Emulgatoren eine weitergehende Einflussnahme auf die Fliesseigenschaften der Lebensmittelsuspension zulässt, als dies für herkömmliche Schokoladesysteme der Fall ist.

Beispielsweise zeigt sich bei der Verwendung der erfindungsgemässen sphärischen, amorph verfestigten Komposite-Partikel, dass die Zugabe von Lecithin, einem typischer Schokoladenemulgator, keine Verbesserung, sondern eher eine deutliche Verschlechterung der Fliesseigenschaften bewirkt.

Insbesondere zeigt sich, dass für sphärische Komposite-Partikel, die in einer bevorzugt fettkontinuierlichen Fluidphase mit einer schokoladentypische Feststoffvolumenkonzentration von 55 Volumen-% dispergiert vorliegen, die Fliessgrenze $\tau_0$ unter kompletter Einsparung von Lecithin als Emulgator um einen Faktor von grösser als 10, bevorzugt um den Faktor von grösser als 20, und weitergehend bevorzugt um den Faktor von grösser als 50, für das erfindungsgemässe Suspensionssystem erniedrigt ist, gegenüber einer Suspension mit 0.3-0.5 Gewichts-% Lecithinzusatz (Menge des Emulgators bezogen auf die Emulgatormenge und Menge an Fettphase) bei ansonsten gleicher Zusammensetzung, in welcher die in den sphärischen Partikeln enthaltenen Komponenten jedoch in kantiger Form, also nicht erfindungsgemäss sphärischer Partikelform, und separat, jedoch mit gleicher oder zumindest vergleichbarer Partikelgrössenverteilung, vorliegen.

Andererseits bewirkt die Zugabe von PGPR (Polyglycerol-Polyrizinoleat), ein anderer schokoladentypischer herkömmlicher Emulgator, zu einer Lebensmittelsuspension mit erfindungsgemässen sphärischen Partikeln eine extrem verstärkte Abnahme der Fliessgrenze bis zu deren vollständigem Verschwinden.

Es hat sich insbesondere gezeigt, dass für sphärische Komposite-Partikel, die in einer bevorzugt fettkontinuierlichen Fluidphase mit einer schokoladentypische Feststoffvolumenkonzentration von 55 Volumen-% dispergiert vorliegen, die Fliessgrenze $\tau_0$ unter Zusatz von PGPR (Polyglycerin-Polyrizinoleat) Emulgator um einen Faktor von grösser als 5, bevorzugt um den Faktor von grösser als 10, weitergehend bevorzugt um den Faktor von grösser als 100, für das erfindungsgemässe Suspensionssystem erniedrigt ist, gegenüber einer Suspension gleicher Zusammensetzung, in welcher die in den sphärischen Partikeln enthaltenen Komponenten in kantiger Form, also nicht erfindungsgemäss sphärischer Partikelform, und separat, jedoch mit gleicher oder zumindest vergleichbarer Partikelgrössenverteilung, vorliegen.

Dies eröffnet neue Horizonte in der Beeinflussung und Einstellung der Fliesseigenschaften von Suspensionssystemen, insbesondere schokoladenartigen Suspensionssystemen, unter Einsatz der erfindungsgemässen sphärischen, amorph verfestigten Komposite-Partikeln und entsprechender Emulgatoren.

Grenzflächenaktive Substanzen (Emulgatoren), die auf glatten dispersen Oberfläche der sphärischen Komposite-Partikel angeordnet sind, erreichen in Folge der runden Teilchenform sowie der glatten, amorphen Biopolymer-Teilchenoberfläche, insbesondere Zucker- Teilchenoberfläche, bereits bei sehr kleinen Konzentrationen von grösser gleich 0.01 Gewichts-% (Menge des Emulgators bezogen auf die Emulgatormenge und Menge an Fettphase), bevorzugt von grösser gleich 0.05% (Menge des Emulgators bezogen auf die Emulgatormenge und Menge an Fettphase), eine massgebliche Beeinflussung der Partikel-Partikel Wechselwirkungen im Stoffsystem, welche sich in einer deutlich messbaren Viskositätsbeeinflussung auswirkt.

Zur Erzielung einer massgeblicher Einflussnahme auf die Partikel-Partikel Wechselwirkung für typische in Schokoladesystemen übliche Emulgatoren wie Lecithine oder PGPR (Polyglycerin-Polyrizinoleat) kann deren Konzentration um einen Faktor von grösser als 2 bis 5, bevorzugt um einen Faktor von grösser als 10, reduziert werden.

Damit ist das Potential der Fettphasen- und einhergehenden Kaloriendichte-Reduktion deutlich erweitert.

Wenn sphärische Komposite-Partikel in einer bevorzugt fettkontinuierlichen Fluidphase dispergiert vorliegen, kann in Folge der zu kleineren Werten verschobenen rheologischen Eigenschaften, wie Viskositätsfunktion $\eta(\dot{\gamma})$ und Fliessgrenze $\tau_0$, eine Reduktion des Anteils an kontinuierlicher Fettphase erfolgen, welche diese Reduktion der rheologischen Kennwerte kompensiert. Es lassen sich somit Einsparungen der kalorienreichen und kostenträchtigen Fettphase für schokoladentypische Produkte von grösser als 5%, bevorzugt von grösser als 10%, weitergehend bevorzugt von grösser als 25% erreichen (Prozentangaben auf Kalorien bezogen). Dabei entspricht eine Fettreduktion von 15 Volumen % alleine schon einer Kalorienreduktion von 24%.

In Folge einer Fettreduktion in Höhe von 10-25% (bezogen auf die Gesamtmasse), zur Kompensation der erfindungsgemässen Absenkung, sowie durch Einsatz von W/O-Emulsionen als fettkontinuierliche Suspensionsphase mit Wasseranteilen von 50-80 Gewichts-% (bezogen auf die fettkontinuierliche Fluidphase), kann gegenüber herkömmlichen in der Rezeptur der Basisschokolade identischen Produkten eine Gesamt-Fettreduktionen von 20-40% und unter Einbezug der Wassereinlagerung in den amorphen, sphärischen Komposite-Partikeln von kleiner gleich 10 Gewichts-%, eine einhergehende Kalorienreduktionen von 25-50% erfolgen und dabei rheologische Kennwerte erreicht werden, die vergleichbar sind mit rheologischen Kennwerten von Massen mit herkömmlichen Bestandteilen.

Es kann daher auf Basis der sphärischen, amorph verfestigten Komposite-Partikel deutlich kostenreduziert ein hochwertiges Verzehrprodukt mit reduziertem Kaloriengehalt hergestellt werden.

Sphärische Komposite-Partikel, die in einer bevorzugt fettkontinuierlichen Fluidphase dispergiert vorliegen, wobei alle in die sphärischen Partikel und die fettkontinuierliche Phase inkorporierten dispersen und gelösten Komponenten derart abgestimmt sind, dass ein Schokoladensystem resultiert, welches die Qualitätscharakteristika eines Premium-Produkts aufweist, führen zu einem Lebensmittelprodukt mit einer Kalorienreduktion von mindestens 20-40%.

Bei dem Verzehrprodukt kann es sich um eine Schokoladentafel, eine Praline, einen Kuchen oder Backwaren mit Schokoladenfüllung oder Schokoladenbelag und/oder Schokoladenüberzug, ein Riegel oder andere Produktformen handeln.

Die Erfindung betrifft weiter eine Lebensmittelsuspension, insbesondere wie oben beschrieben, mit in einer Fettphase suspendierten Feststoffteilchen, die zu über 90% aus Bestandteilen ausgewählt aus der Gruppe bestehend aus Kakaobutter, Zucker und Kakao besteht, dadurch gekennzeichnet, dass die Lebensmittelsuspension weniger als 50 Volumen-% Kakaobutter enthält und die Fliessgrenze $\tau_0$ bei 40°C kleiner als 10 Pa ist. Insbesondere enthält die Fettphase weniger als 0.5% Emulgator.

Insbesondere besteht die Lebensmittelsuspension zu mindestens 50 Gewichts-%, bevorzugt mindestens 65 Gewichts-%, insbesondere bevorzugt mindestens 70 Gewichts-% aus Feststoffen, die ihrerseits aus Zucker und/ oder Biopolymeren und/oder Kakaofeststoffen und/oder Milchbestandteilen bestehen, wobei 50% des Volumens aller Partikel grösser 5$\mu$m sind und eine sphärische Form aufweisen.

Bevorzugt sind 50% des Volumens aller Partikel grösser als 5$\mu$m und sphärisch, wobei maximal 10% des Volumens aller Partikel grösser als 60$\mu$m sind.

Die Erfindung betrifft weiter eine Lebensmittelsuspension, die aus Feststoffen und einem im Wesentlichen homogenen Trägermaterial besteht, insbesondere wie oben beschriebene, wobei das Trägermaterial 0.01-5% Gewichts-% PGPR und 20-50 Gewichts-% eines flüssigen Fetts, enthält, wobei die Lebensmittelsuspension eine Fliessgrenze $\tau_0$ bei 40°C von 0.001-20 Pa aufweist.

Unter flüssigem Fett wird insbesondere ein Fett verstanden, das in einem Temperaturbereich von -20°C bis +60°C flüssig ist.

Die Erfindung betrifft weiter eine Lebensmittelsuspension, die aus Feststoffen und einem im Wesentlichen homogenen Trägermaterial besteht, insbesondere wie oben beschriebene, wobei das Trägermaterial 20-50 Gewichts-% eines flüssigen Fetts enthält, keinen Emulgator enthält und wobei die Lebensmittelsuspension eine Fliessgrenze $\tau_0$ bei 40°C von 0.01-20 Pa aufweist.

Die erfindungsgemässe Aufgabe wird ausserdem gelöst durch ein Verfahren zum Einstellen der Schubspannung in Suspensionen mit sphärischen Teilchen, insbesondere wie oben beschrieben, wobei die Schubspannung unter Zugabe von Lecithin erhöht wird, bevorzugt bis zu einem vorgegebenen, gewünschten Wert.

In herkömmlichen Schokoladenmassen wird Lecithin als schubspannugssenkender Zusatz verwendet. Die Verwendung von Suspensionen mit sphärischen Teilchen, insbesondere wie oben beschrieben, erlaubt die Erhöhung und damit eine genaue Einstellung der Schubspannung durch gezielte Zugabe von Lecithin.

Die Konsistenz der Masse ist somit präzise festlegbar, was vorteilhaft für die Verarbeitung und für den Endverbrauch ist. Durch späte Zugabe von Lecithin kann die Schubspannung auch zunächst niedrig gehalten werden und erst gegen Ende der Verarbeitung auf einen gewünschten höheren Wert gebracht werden.

Die Erfindung wird nachfolgend in Ausführungsbeispielen und anhand von Zeichnungen näher erläutert.

Es zeigen

Figur 1a      ein Diagramm, in welchem der Einfluss des Anteils von Dextrose DE43 an einem Dextrose DE43/Saccharose Gemisch auf die Glasübergangstemperatur als Funktion des Wassergehalts aufgezeigt ist;

Figur 1b      ein Diagramm, in welchem der Einfluss des Polymerisationsgrades der Dextrose auf die Glasübergangstemperatur als Funktion des Wassergehalts aufgezeigt ist;

Figuren 2a, 2b      Diagramme, in welchen die Grössenverteilungen zweier Modellsysteme aufgezeigt sind;

Figur 3      ein Diagramm, in welchem die Viskositäten und die Schubspannungen von Lebensmittelsuspensionen mit sphärischen und kantigen Partikeln als Funktion von der Scherrate aufgetragen sind;

Figur 4      ein Diagramm, in welchem die Fliessgrenzen der Lebensmittelsuspensionen mit sphärischen und kantigen Partikeln in Abhängigkeit von der Volumenfeststoffkonzentration mit und ohne den Emulgator Lecithin aufgetragen sind;

Figur 5a, 5b      Diagramme, in welchem die Schubspannungen der Lebensmittelsuspensionen mit sphärischen und kantigen Partikeln mit und ohne Emulgatoren Lecithin und PGPR in Abhängigkeit von der Scherrate aufgetragen sind;

Figur 6      ein Diagramm, in welchem die Schubspannungsfunktionen von Lebensmittelsuspensionen mit sphärischen Komposite-Partikeln und kantigen Partikeln und mit dem Emulgator PGPR vergrössert dargestellt sind;

Figur 7      eine REM (rasterelektronenmikroskopische)-Aufnahme von erfindungsgemässen sphärischen Partikeln;

Figur 8      eine REM (rasterelektronenmikroskopische)-Aufnahme von kantigen Partikeln, wie sie in konventionell erzeugten Verzehrmassen benutzt werden.

Zur beispielhaften Herstellung erfindungsgemässer sphärischer Teilchen wird zunächst eine Komponentenmischung A erstellt, nämlich Sucrose, Dextrose mit DE43 und/oder Kakaopulver mit unterschiedlichen Anteilen gemischt. Die jeweiligen Anteile für die verschiedenen Beispiele sind Tabelle 1 zu entnehmen.

Die Mischung wird in Wasser eingebracht, wobei der Sucrose- und Dextroseanteil in Lösung geht, sodass ein Feststoffanteil von 0.4-0.65 vorliegt, was einem Gewichtsanteil von 40-65% entspricht.

Die Mischung wird unter Rühren für 10-30 Minuten auf 75-90°C erhitzt.

Alternativ kann zuerst der Zucker bei Temperaturen von 50°C-80°C unter intensivem Rühren eingemischt werden und bei weiterem Rühren, insbesondere während 10-30 Minuten, gelöst werden. Anschliessend können weitere Komponenten zugegeben werden. Kakaopulver kann in einer vorteilhaften Ausführung bei Temperaturen von 20-50°C eingemischt werden.

Gleichzeitig wird eine Komponentenmischung B erstellt. Im vorliegenden Beispiel besteht die Komponentenmischung B aus Magermilchpulver mit unterschiedlichen Anteilen, wie sie ebenfalls der Tabelle 1 entnehmbar sind. Alternativ können auch andere Milchbestandteile eingesetzt werden, wie z.B. Molkeproteinisolat. Anstelle von pulverförmigen vorliegenden Milchbestandteilen können diese auch als flüssig vorliegende Komponenten verwendet werden.

Die Komponentenmischung B wird mit etwa der gleiche Menge Wasser versetzt wie die Anteile A und zunächst auf 55-66 °C vorgewärmt.

Anschliessend werden die in wässrigen Lösungen vorliegenden Mischungen A und B zusammengegeben, weitergehend vermischt, anschliessend sprühgetrocknet und sphärisch partikuliert.

Tabelle 1:

| | Inhaltsstoffe | Beispiel 1 Anteil in Gew.% | Beispiel 2 Anteil in Gew.% | Beispiel 3 Anteil in Gew.% |
|---|---|---|---|---|
| A | Sucrose | 46.2 | 40.6 | 60 |
| | Dextrose DE43 | 30.8 | 27.1 | 10 |
| | Kakaopulver | 23.1 | 7.5 | 30 |
| B | Magermilchpulver | 0 | 24.8 | 0 |

Für die untersuchten Beispiele ergeben sich die aus Tabelle 2 ersichtlichen Werte für die Glastemperatur und den Wassergehalt.

Tabelle 2:

| | Beispiel 1 | Beispiel 2 | Beispiel 3 |
|---|---|---|---|
| Glasübergangstemperatur ($T_g$ in °C) | 70.9 | 55.6 | 52.9 |
| Wassergehalt (in Gew.%) | 1.2 | 2.2 | 2.9 |

Aufgrund der verwendeten Inhaltsstoffe weisen die sprühgetrockneten Partikel ein Matrixmaterial auf, hier bestehend aus Sucrose und Dextrose DE43, mit einem Dextroseäquivalent von grösser 43.

Werden die Partikel bei einer relativen Feuchte von unter 0.33 bei 25°C gelagert, so erfolgt während 48h keine Nachkristallisation. Der Wassergehalt wird mit einer gesättigten Salzlösung eingestellt, welche die Wasseraktivität über die Fugazität definiert.

Der Wassergehalt wurde mittels Karl-Fischer-Titration ermittelt. Dabei wurden die Geräte 784 KFP Titrino und 703 Ti Stat der Firma Metrohm AG verwendet.

Für die Analyse wurde das Lösungsmittel (HYDRANAL® Formamid, Art. Nr. 34724-1L und Methanol, Art. Nr. 34741-2.5L-R im Verhältnis 1:1) vorgelegt und auf 50°C aufgewärmt. Die Analyse wurde bei 50°C durchgeführt, weil sich bei diesen Temperaturen der Zucker einfacher löst.

Das Messgerät wurde mittels des HYDRANAL®-Wasser Standards 10.0 (Sigma-Aldrich, Art. Nr. 34849-80ML) nach Vorschrift kalibriert. Als Titrationslösung wurde HYDRANAL® Composite 5 (Art. Nr. 34805-1L-R, Sigma Aldrich) verwendet.

Für die Wassergehaltbestimmung wurde die zu analysierende Probe (150-250 mg) mittels einer Analysewaage (Mettler Toledo AE200) abgewogen und in dem auf 50°C vorgewärmten Formamid / Methanolgemisch aufgelöst. Nach dem vollständigen Auflösen der Probe wurde die Titration gestartet und schliesslich nach Umrechnung des volumetrischen Ergebnisses der gravimetrische Wassergehalt (Wassergehalt bezogen auf die feuchte Probe) bestimmt.

Die Glasübergangstemperatur $T_g$ wurde gemäss DIN 51007 mittels dynamischer Differenzkalorimetrie (DSC) ermittelt. Die Messung erfolgte mit dem Gerät DSC822e der Firma Mettler-Toledo GmbH.

5mg des jeweiligen Probenmaterials wurden unverdichtet im Probenbehälter eingewogen. Die Einwaage erfolgte mit einer Sartorius MC5 (Seriennummer 40809390)-Waage. Als Probenbehälter wurde ein $40\mu l$ Alutiegel der Firma Mettler Toledo (Artikelnummer 5119870) verwendet. Der Tiegel wurde verschlossen und in die Messzelle gesetzt.

Die Messung erfolgte bei Umgebungsluft. Als Starttemperatur wurde 10°C gewählt und die Probe mit einer Heizrate von 10°C pro Minute bis auf 170°C erhitzt. Anschliessend wurde die Probe wieder auf 10°C abgekühlt. Die Startemperatur wurde für fünf Minuten konstant gehalten.

Die Auswertung wurde mittels STARe - Software (SW 8.10, Mettler-Toledo GmbH) vorgenommen. Dabei wurden die Integrationsgrenzen automatisch festgelegt und als Auswertungspunkt der DIN Mittelpunkt festgelegt, der als Schnittpunkt einer Horizontalen auf halber Stufenhöhe mit der Messkurve definiert ist.

Die Stufenhöhe ist durch den vertikalen Abstand der beiden Schnittpunkte der Mitteltangenten mit den Basislinien der Messkurve vor und nach der Glasumwandlung definiert. Die Mittetangente wird iterativ bestimmt.

Die Kalibrierung erfolgte mit einer Indiumprobe. Eine Basislinienkonstruktion war nicht notwendig, da ein leerer Referenztiegel mitgemessen wurde.

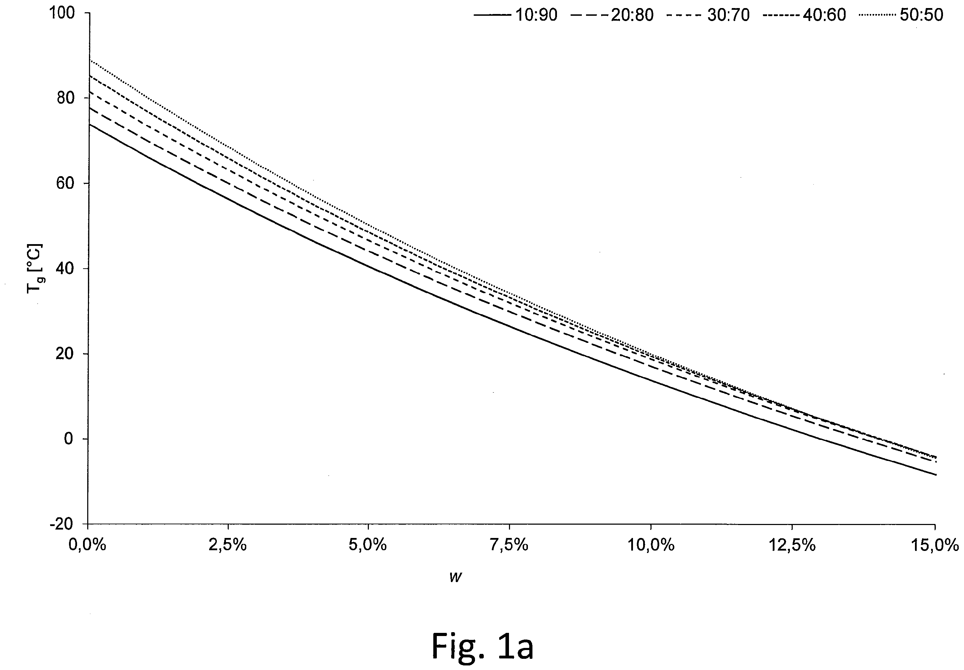

Figur 1a zeigt den Einfluss des Anteils von Dextrose DE43, also von Dextrose mit einen Dextroseäquivalent von 43, an einem Dextrose/Saccharose-Gemisch auf die Glasübergangstemperatur.

Aufgetragen ist die Glasübergangstemperatur $T_g$ in °C über dem Wassergehalt w (Angabe in Gewichtsprozenten) für Dextrose/Saccharose-Gemische mit unterschiedlichen Anteilen von Dextrose DE43, wobei fünf Kurven gezeigt sind, welche jeweils die Werte für die Anteilsverhältnisse 10:90, 20:80, 40:70, 50:60 und 50:50 darstellen.

Die Glasübergangstemperatur sinkt mit zunehmendem Wassergehalt, Je grösser allerdings der Anteil der Dextrose DE43 ist, desto höher ist die Glasübergangstemperatur.

Grundsätzlich ergibt sich die Glasübergangstemperatur für zwei Komponenten Systeme aus dem Gordon-Taylor-Modell in der folgenden Form:

$$T_g = (x_1 \ T_{g,1} + K \ x_2 \ T_{g,2}) / (x_1 + K \ x_2)$$

wobei

$$K = \Delta c_{p,w} / \Delta c_{p,i}$$

Hierbei ist $x_i$ die Gewichtsfraktion der Komponente i, $T_{g,i}$ die Glasübergangstemperatur der Komponenten i in K, K die Gordon Taylor Konstante, $\Delta c_{p,w}$ die Änderung der Wärmekapazität beim Glasübergang von Wasser in J kg$^{-1}$ K$^{-1}$ und $\Delta c_{p,i}$ die Änderung der Wärmekapazität beim Glasübergang der Komponente i.

Im vorliegenden Fall wurden die Messdaten mittels Gordon-Taylor-Kurven approximiert.

Die Messung der Glasübergangstemperatur $T_g$ wurde mittels Dynamisch Mechanischer Analyse (DMA) mit einer DMA Q800 (TA Instruments, USA) und der dazugehörigen Auswertesoftware Universal Analysis (SW 4.5A, TA Instruments, USA) durchgeführt.

Die Messungen wurden in der Penetrationsgeometrie mittels der "Kontrollierten-Kraft-Methode" durchgeführt. Die Proben (120 mg, feste Proben zu Tabletten gepresst mit 5 kN) wurden in eine zylinderförmige Vertiefung (2.5 mm Tiefe, 6 mm Durchmesser) gegeben. Die Probe wurde im Messgerät vor der Messung temperiert (5 Minuten, -60°C). Der bewegliche Schaft (zylinderförmige Spitze, Durchmesser 2.8 mm) der Penetrationsgeometrie drückte während der gesamten Messdauer mit einer konstanten statischen Kraft (5N) auf die Probe. Dabei wurde der Weg des beweglichen Schaftes (Einsinken in Probe) aufgezeichnet. Es wurde eine Temperaturrampe mit einer Heizrate von 2°C pro Minute gefahren bis der Schaft die Nullposition erreicht hatte. Anhand der Temperatur vs. Positionskurve wurde mit der Auswertesoftware die Onset-Temperatur des Glasübergangs bestimmt. Im vorliegenden Fall wurde dazu die Positionskurve mit einem Abstand von 0.5°C ausgewertet und die Steigung bestimmt. Überstieg die Steigung den Wert von 10 $\mu$m/°C, so galt der Onset-Temperatur als erreicht.

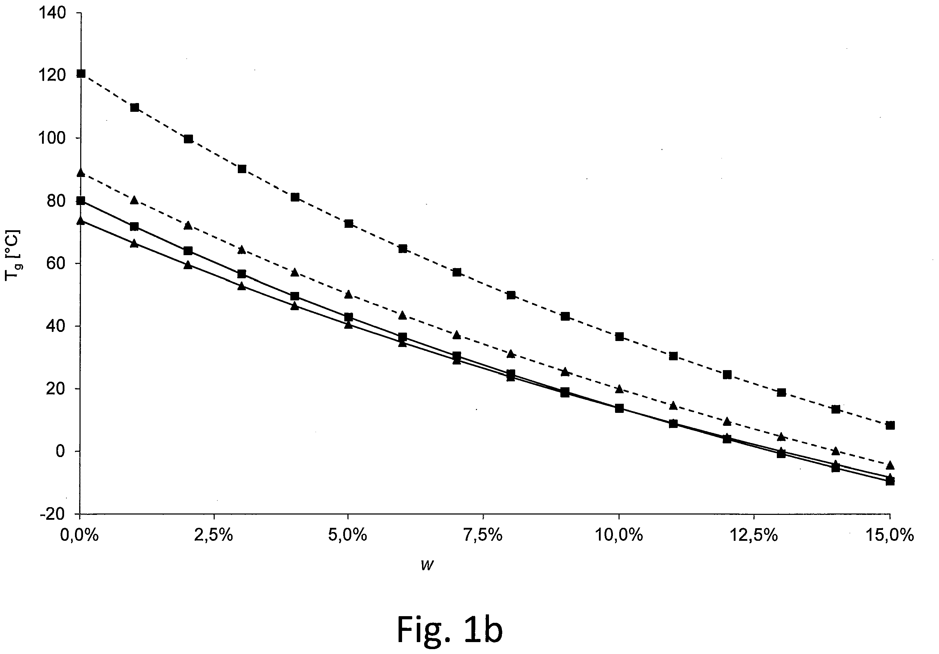

Figur 1b zeigt den Einfluss des Polymerisationsgrades auf die Glasübergangstemperatur. Wiederum ist die Glasübergangstemperatur $T_g$ in °C über dem Wassergehalt für Dextrose/Saccharose-Gemische w (Angabe in Gewichtsprozenten) mit unterschiedlichen Dextroseanteilen und für unterschiedliche Dextrosen aufgetragen.

Kurven 1 und 2 (gestrichelt) zeigen jeweils die Glasübergangstemperatur für Dextrose/Saccharose Gemische, bei welchen das Verhältnis von Dextrose zu Saccharose 50:50 beträgt, Kurven 3 und 4 (durchgezogen) die Glasübergangstemperatur für Dextrose/Saccharose Gemische, bei welchen das Verhältnis von Dextrose zu Saccharose 10:90 beträgt.

Es wurden jeweils eine Dextrose mit einem Dextroseäquivalent von DE43 (Kurven 1 und 3, dreieckige Symbole) und eine Dextrose mit einem Dextroseäquivalent von DE19 (Kurven 2 und 4, viereckige Symbole) verwendet.

Grundsätzlich wird analog zu Figur 1a bestätigt, dass die Glasübergangstemperatur mit zunehmendem Wassergehalt abfällt und höher bei einem höheren Anteil der Dextrose ist.

Je höher ausserdem der Polymerisationsgrad (kleineres Dextroseäquivalent) ist, desto höher die Glasübergangstemperatur.

Für die vergleichenden rheologischen Untersuchungen werden zwei Modellsysteme erstellt.

Sie enthalten bezogen auf die Gesamtmasse einen Gewichtsanteil von 50% Zucker (Dextrose DE43 und Saccharose in einem Verhältnis von 40:60), einen Gewichtsanteil von 15% Kakao (Gerkens Cacao, mit 10.5 Gewichts-% Fett), einen Gewichtsanteil von 34.5 % Kakaobutter (Delphi, desodoriert) in einem Gewichtsanteil von 0.5% Sojalecitin (Lecico F600 IPM).

Für das erste Modellsystem wurden der Kakao und der Zucker gemeinsam sprühgetrocknet. Es ergeben sich sphärische Partikel.

Für die Herstellung der Sprühlösung wird 15.5 Gewichts-% Kakaopulver, 23 Gewichts-% Saccharose, 11.5 Gewichts-% Dextrose DE43 in 50 Gewichts-% Wasser gelöst.

Aufgrund der verwendeten Inhaltsstoffe hat das Matrixmaterial, hier bestehend aus Saccharose und Dextrose DE43, ein Dextroseäquivalent von grösser 43.

Die Lösung besitzt eine Dichte von etwa 1450 kg/m³ und eine Viskosität von etwa 250 mPa s bei einer Scherrate von 34.6 s⁻¹, wie sie typischerweise beim Durchtritt durch die Düse vorliegt.

Die Lösung wird mittels eines Heissluftstroms, dessen Volumenstrom von 0.102 m³/s beträgt, bei einem Fluidvolumenstrom von 0.96 l/h in einem Sprühtrockner prozessiert. Die Temperatur der Trocknungsluft beträgt bei Eintritt in den Sprühturm ca. 155-180°C, in der Mitte des Sprühturmes ca. 115-130°C und beträgt beim Ausströmen aus dem Sprühtrockner (Vermischung mit Frischluft von 20°C) noch etwa 70-85°C. Das Produkt wird bei Temperaturen kleiner als die Glasumwandlungstemperatur stabil entnommen.

Als Düse wird eine Zweistoffdüse, insbesondere eine Exmix - Zweistoffdüse, verwendet mit einer Innenöffnung für die Fluidphase, die einen Durchmesser von 4 mm besitzt, und mit einer konzentrischen Ringöffnung für die Sprühgasphase. Die Länge der Düse beträgt 0.05m.

Die Geschwindigkeit der Atomisierungsluft, die mit etwa 100°C durch die Ringöffnung strömt, beträgt etwa 140 m/s.

Die resultierenden sphärischen Partikel haben eine Restfeuchte von 2.0-4.5 Gewichts-%.

Die Partikelgrösse kann über die Geschwindigkeit der Atomisierungsluft, die Viskosität der Lösung, den Durchmesser der zentralen Düsenöffnung und/oder den Durchmesser des Ringspalts eingestellt werden.

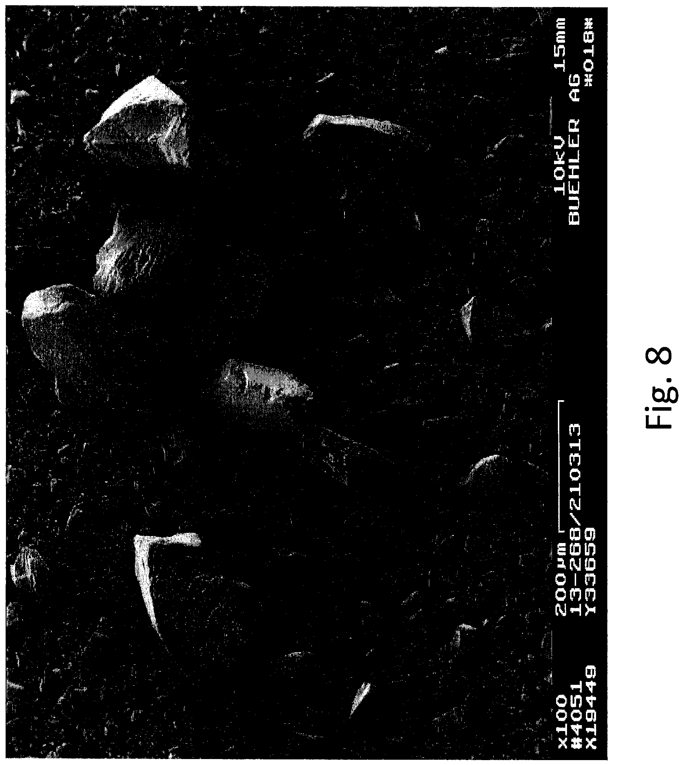

Für ein zweites Modellsystem werden der Kakao und der Zucker auf einem Drei-Walzwerk herkömmlich verarbeitet. Die entstehenden Partikel sind gebrochene Kristalle mit einer facettierten Oberfläche, im Folgenden sind diese als "kantige Partikel" bezeichnet. Figur 8 zeigt die Struktur von kantigen Partikeln, wie sie beim Prozess der Zerkleinerung in Walzwerken entstehen.

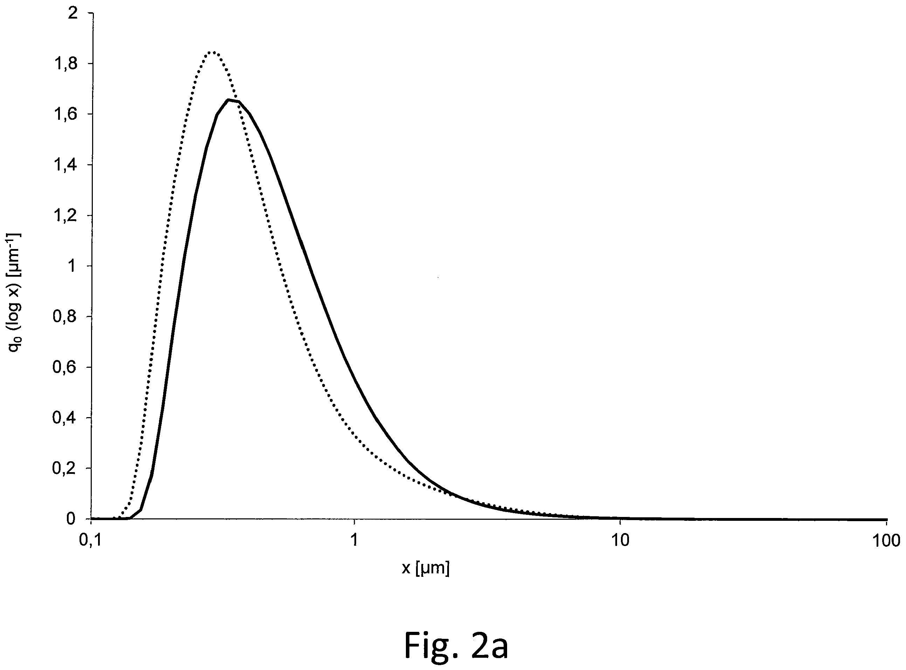

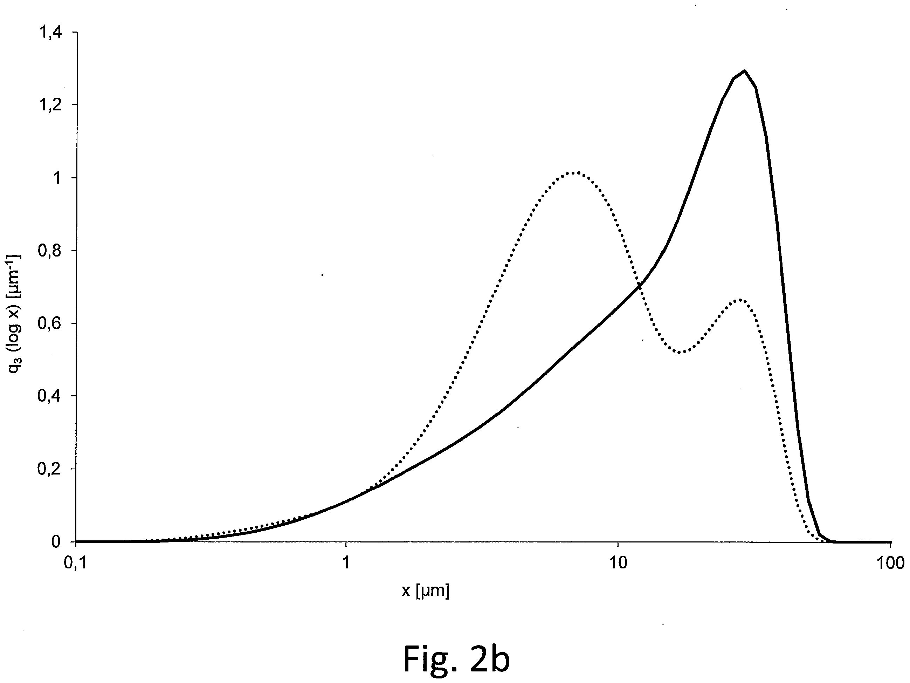

Figuren 2a und 2b zeigen mit den jeweils durchgezogenen Linien die Grössenverteilungen der sprühgetrockneten sphärischen Partikel.

Die gestrichelten Linien zeigen jeweils die Grössenverteilungen der kantigen Partikel.

In Figur 2a ist die Anzahldichteverteilung $q_0$ über der Partikelgrösse dargestellt, während Figur 2b die Volumenverteilung $q_3$ über der Partikelgrösse, zeigt.

$q_0$ und $q_3$ Werte bei einer bestimmten Partikelgrösse $x_i$ berechnen sich gemäss

$$q_0 \ (x_i) \ = \ n_i \ / \ (\Delta x_i \ \Sigma \ n_i)$$

$$q_3 \ (x_i) \ = \ v_i \ / \ (\Delta x_i \ \Sigma \ v_i)$$

wobei $n_i$ die Anzahl der Teilchen im Durchmesserintervall zwischen $x_i$-$\Delta x_i$ und $x_i$ sind und $v_i$ das Gesamtvolumen der Teilchen im Durchmesserintervall zwischen $x_i$-$Ax_i$ und $x_i$ ist.

Die Partikelgrössenverteilungen wurden mit Laserbeugungsspektroskopie ermittelt. Dabei wurde ein Beckman Coulter LS13320 Gerät verwendet.

Während der Kakao bei den sphärischen Partikeln in sphärische amorphe Zuckerhüllen eingebettet ist, liegt der Kakao in der Vergleichsmasse als kantige, nicht umhüllte Teilchen vor. Die kleineren Kakaoteilchen und die mangelnde Sphärizität der kantigen Zuckerteilchen sind verantwortlich für eine Verbreiterung der Kurve und die Ausbildung eines weiteren Peaks in der Volumengrösseverteilung der kantigen Teilchen in Figur 2b.

Figuren 2a und 2b zeigen, dass die beiden Modellsysteme hinsichtlich der Partikelgrössenverteilung durchaus vergleichbar sind.

Die Modellsysteme unterscheiden sich dadurch, dass es sich einerseits um kantige, andererseits um sphärische Partikel handelt.

Die kantigen und sphärischen Partikel werden jeweils in Kakaobutter suspendiert.

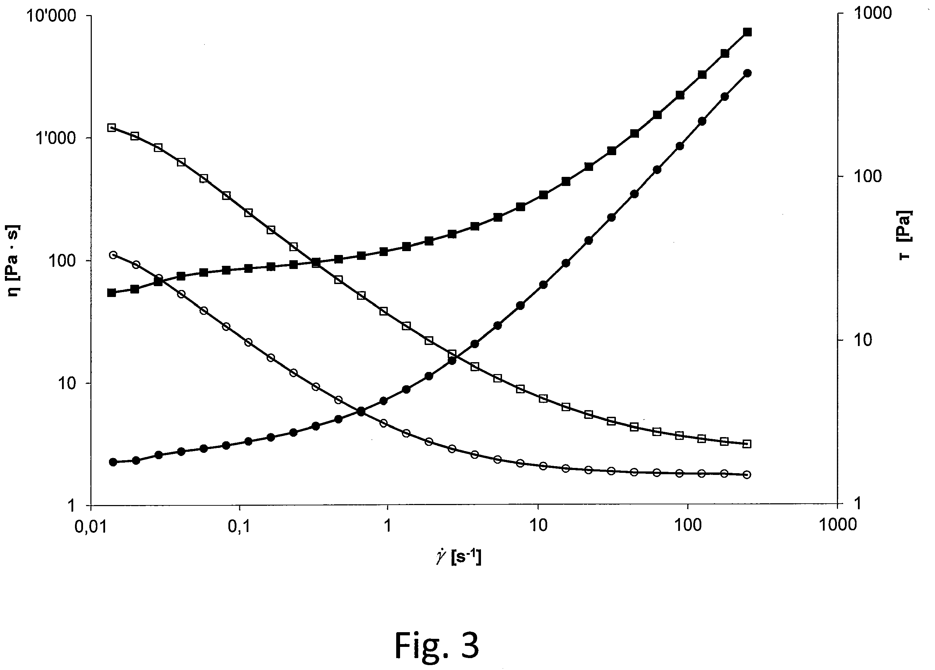

Figur 3 zeigt anhand nicht ausgefüllter Symbole die Viskosität $\eta$ der Kakaobuttersuspensionen, in welcher zum einen die kantigen Partikel (eckige Symbole), zum anderen die sphärischen Partikel (runde Symbole) suspendiert sind, in Abhängigkeit von der Scherrate bei einer Feststoffvolumenanteil von 0.55. Die Masse hat einen Lecithingehalt von 0.5 Gewichts-% (bezogen auf die Emulgator- und Fettphase). Die Messungen wurden bei einer Temperatur von 40 °C durchgeführt.

In derselben Figur sind mit entsprechend ausgefüllten Symbolen die korrespondierenden Schubspannungsfunktionen $\tau$ dargestellt.

Offensichtlich ergibt sich für die sphärischen Teilchen eine niedrigere Viskosität/Schubspannung über den gesamten Scherraten-Bereich. Bei gleichem Feststoffvolumenanteil ergibt sich daher mit sphärischen Teilchen eine deutlich besser fliessfähige Modellschokoladenmasse.

Dies hat gravierenden Einfluss auf die sensorische Qualität der Masse und auf die Verarbeitbarkeit der Masse.

Die Schubspannungsfunktionen können gemäss Windhab-Modell gut approximiert werden und liefern für eine Extrapolation in Richtung verschwindender Scherraten als Grenzwert die Fliessgrenze $\tau_0$. Sie ist eine Mass für den Beginn des Fliessens bei Steigerung der Schubspannung.

Ist die Fliessgrenze der Masse zu hoch, so kann die Masse nicht mehr oder nur noch schwer gepumpt werden und ist nicht mehr oder nur unter hohem energetischen Aufwand verarbeitbar.

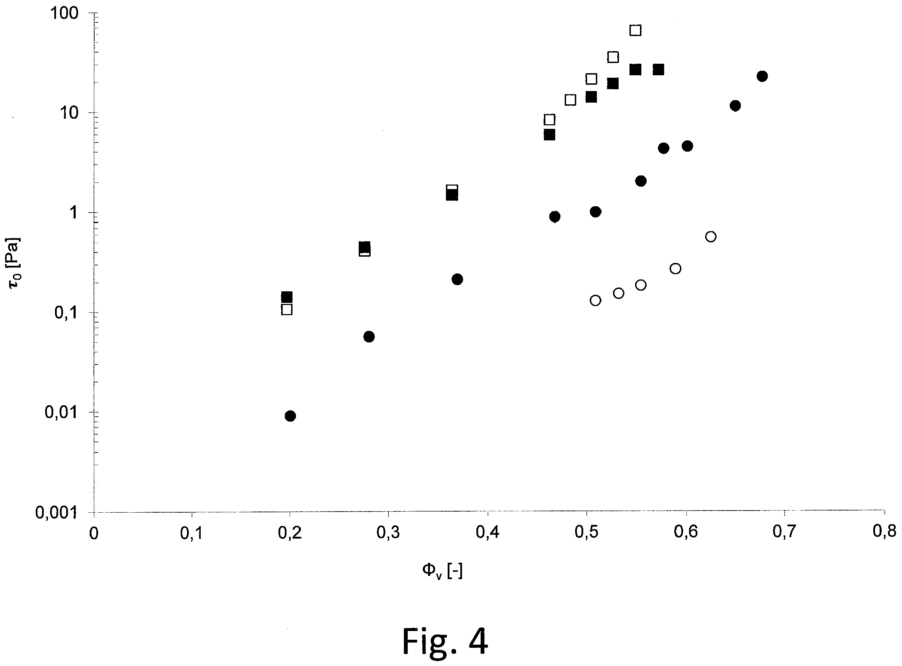

In Figur 4 sind die Fliessgrenzen $\tau_0$ der Modellsysteme in Abhängigkeit von deren Feststoffvolumenkonzentrationen dargestellt.

Dabei zeigen die quadratischen Symbole die Fliessgrenze für das Modellsystem mit kantigen Teilchen, die runden Symbole die Fliessgrenze für das Modellsystem die sphärischen Partikeln, die nicht ausgefüllten Symbole die Werte für das jeweilige Modellsystem ohne Zusatz von Lecithin und die ausgefüllten Symbole die Werte für das jeweilige System mit einem Anteil von 0.5 Gewichts-% Lecithin (Emulgatormenge bezogen auf Menge an Emulgator und Fettphase).

Über den gesamten Bereich der Feststoffvolumenkonzentrationen ergibt sich für die Kakaobutter mit den sphärischen Teilchen eine deutlich niedrigere Fliessgrenze.

Wird auf die logarithmische Darstellung verzichtet, so zeigt sich, dass bei Feststoffvolumenanteilen von unter 50% die Viskositäten der Massen mit kantigen und sphärischen Partikeln von vergleichbarer Grössenordnung sind. Bei höheren Feststoffvolumenkonzentrationen ist hingegen die Viskosität der Suspension mit kantigen Zuckerteilchen wesentlich grösser. Das heisst, dass die sterischen Nahwechselwirkungen den Partikel-Struktureinfluss auf die rheologischen Suspensionseigenschaften dominieren.

Wird eine bestimmte sensorische Qualität gefordert, und damit eine bestimmte Viskosität der Verzehrmasse, so kann diese unter Verwendung sphärischer Partikel noch mit einem höheren Volumenanteil der Zuckerpartikel erreicht werden. Es kann also weniger Kakaobutter verwendet werden, so dass bei geforderter sensorischer Qualität ein kalorienärmeres Produkt hergestellt werden kann.

So entspricht beispielsweise die Viskosität einer Kakaobutter mit kantigen Partikeln bei einem Feststoffvolumenanteil von 0.53 der Viskosität einer Kakaobutter mit sphärischen Teilchen bei einem Feststoffvolumenanteil von 0.68. Die gleiche Viskosität kann also durch Verwendung von sphärischen Partikeln mit 15 Volumen-% weniger Fettphase erreicht werden, was alleine etwa einer Kalorienreduktion von 24% entspricht.

Für die sensorische Qualität spielt ausserdem die Teilchengrösse hinsichtlich der wahrgenommenen Rauigkeit eine Rolle. Während sphärische Teilchen über einen weiten Grössenbereich als nicht unterscheidbar wahrgenommen werden, ergibt sich für kantige Teilchen eine deutliche Wahrnehmungsschwelle. Kantige Teilchen müssen daher für eine gute sensorische Qualität ausreichend lange bearbeitet werden, damit kleine Teilchen, bevorzugt mit einem Durchmesser (volumenbasiert, X90,3) von 90% des Volumens aller Partikel kleiner als 25 $\mu$m, vorliegen.

Die sphärischen Teilchen können dagegen auch als grössere Teilchen, insbesondere mit Durchmessern (volumenbasiert, X90,3) bis zu 90% des Volumens aller Partikel kleiner als 30-45 $\mu$m, verwendet werden, in die weitere Stoffe eingelagert werden können, was lediglich Einfluss auf den Geschmack, nicht aber auf andere Parameter der sensorischen Qualität, wie die gefühlte Körnigkeit oder die Viskosität der Masse, hat.

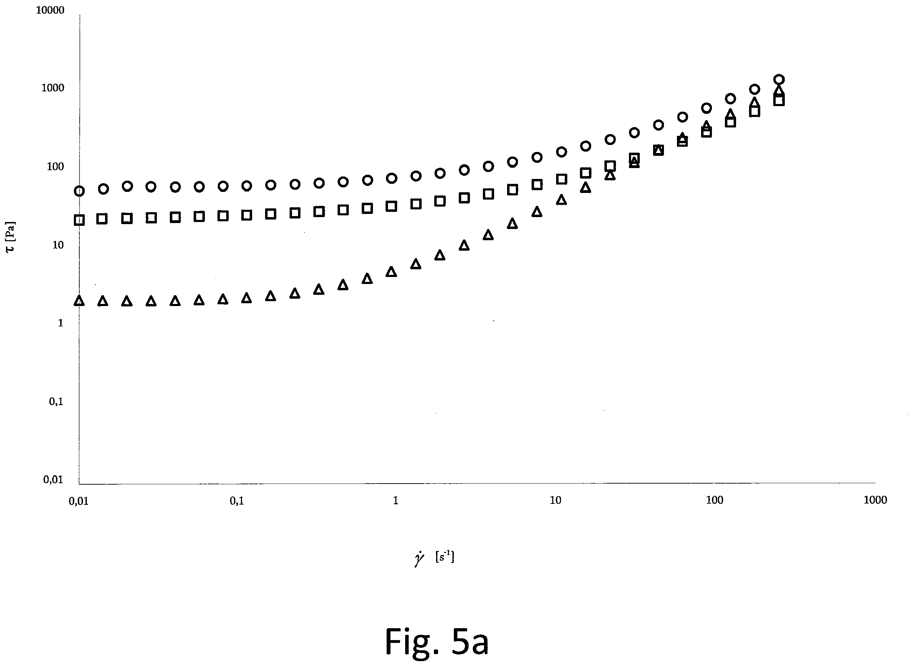

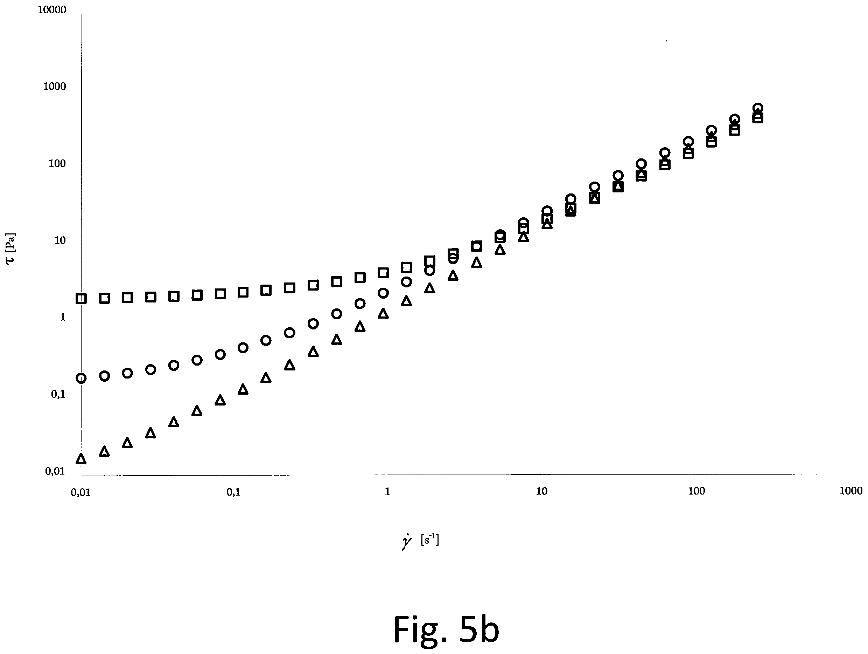

Figur 5a zeigt die Schubspannungen τ der Verzehrmassen mit kantigen Partikeln in Abhängigkeit von der Scherrate, Figur 5b zeigt die Schubspannungen τ der Verzehrmassen mit sphärischen Partikeln in Abhängigkeit von der Scherrate.

Die runden Symbole zeigen dabei die Werte für die jeweiligen Modellsysteme ohne Emulgator, die quadratischen Symbole die Werte für die jeweiligen Modellsysteme mit einem Lecithingehalt von 0.5 Gewichts-% (Emulgatormenge bezogen auf die Menge der Emulgator- und Fettphase) und die dreieckigen Symbole die Werte für die jeweiligen Modellsysteme mit einem PGPR-(Polyglycerin-Polyrizinoleat) Gehalt von 0.5 Gewichts-% (Emulgatormenge bezogen auf die Menge der Emulgator- und Fettphase).

Der Feststoffvolumenanteil beträgt 0.55, die Temperatur 40°C.

Dabei sind zum einen nochmals die schon in Figur 3 dargestellten Werte für die oben beschriebenen Modellsysteme einbezogen (quadratische Symbole), die eine Lecithingehalt von 0.5 Gewichts-% (bezogen auf die Emulgator- und Fettphase) haben.

Zum anderen sind die Schubspannungen für entsprechende Systeme mit kantigen und sphärischen Partikeln dargestellt, bei denen auf die Zugabe des Emulgators verzichtet wurde (runde Symbole).

Betrachtet man zunächst die Kakaobutter mit den kantigen Partikeln, so erkennt man den bekannten Effekt des Emulgators. Die Zugabe führt ab einer gewissen Feststoffvolumenkonzentration zu verminderten Schubspannungen, also zu fliessfähigeren Massen. Das Lecithin wirkt bei den kantigen Partikeln als eine Art Abstandhalter, der ein Verhaken der Teilchen vermindert.

Bei den sphärischen Partikeln hat das Lecithin eine überraschende umgekehrte Wirkung. Ohne das Lecithin vermindern sich die Schubspannungen deutlich.

Die sphärischen Partikel reagieren im Vergleich zu den kantigen Partikeln auf Zugabe von Lecithin also genau gegenteilig.

Überdies ist der Unterschied der Fliessgrenzen verglichen mit und ohne Lecithin bei den sphärischen Teilchen deutlich grösser. Die Abhängigkeit der Fliessgrenzen von der zugegebenen Menge an Emulgator ist ebenfalls ausgeprägter für sphärische Partikeln.

Zugabe des Emulgators PGPR (Polyglycerin-Polyrizinoleat) zu Systemen mit sphärischen Partikeln setzt hingegen die Fliessgrenze bis zu deren Verschwinden bei Erhöhung der Emulgatorkonzentration auf 0.5 Gewichts-% (Emulgatormenge bezogen auf die Menge der Emulgator- und Fettphase) weiter herab (dreieckige Symbole in Figur 5b).

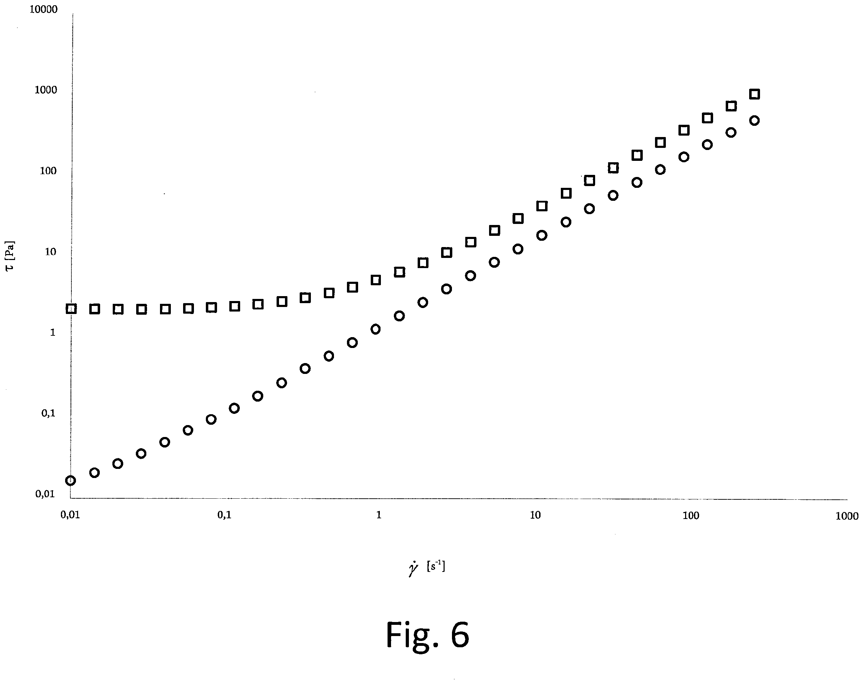

Figur 6 stellt nochmals die Schubspannung in Abhängigkeit der Scherrate für kantige (quadratische Symbole) und sphärische Teilchen (runde Symbole) bei einem Feststoffvolumenanteil von 0.55 und mit einer PGPR Konzentration von 0.5 Gewichts-% (Emulgatormenge bezogen auf die Menge der Emulgator- und Fettphase) dar. Es wird deutlich, dass ein erheblicher Unterschied zwischen dem Einfluss des Emulgators PGPR auf die Schubspannung einer Lebensmittelsuspension mit kantigen oder sphärischen Partikeln besteht.

Für eine Lebensmittelsuspension, in welcher sphärische Partikel in einer im Wesentlichen homogenen Fluidphase, insbesondere einer Fettmasse, suspendiert sind, bedeutet dies, dass grenzflächenaktive Substanzen, also Emulgatoren, welche sich an die Oberflächen der sphärischen Partikel anlagern, bereits bei kleinen Konzentrationen unterhalb eines Feststoffvolumenanteils von 0.5, einen massgeblichen Einfluss auf die Partikel-Partikel Wechselwirkung nehmen, welcher die Effekte im Vergleich zu Suspensionen mit kantigen Partikeln teilweise umkehrt.

Eine gewünschte sensorische Qualität, insbesondere eine Viskosität ist gezielt mit Zugabe einer geringen Menge eines Emulgators einstellbar.

Dabei wurden für schokoladentypische Emulgatoren überraschend neuartige Abhängigkeiten von der Art der Partikelform bzw. Partikeloberfläche gefunden, welche bevorzugt gezielt genutzt werden, um die Fliesseigenschaften entsprechender Suspensionen dahingehend zu optimieren, dass mit minimalem Fluidphasen-, insbesondere Fett-, Anteil und einhergehender Kalorien- und Kostenreduktion maximal reduzierte Viskositäten zu erzielen sind.

Liegen in der Verzehrmasse kantige und sphärische Teilchen vor, so kann auch über den Anteil sphärischer Teilchen und/oder die Art und/oder Menge des Emulgators die Partikel-Partikel Wechselwirkung und damit Fliesseigenschaften, insbesondere die Viskosität, mit eingestellt werden.

Somit kann unabhängig von der Grundrezeptur, also beispielsweise der Menge an Kakao, Zucker und/oder Fettmasse, gezielt Einfluss auf die Fliesseigenschaften genommen werden.

Bevorzugt enthält ein erfindungsgemässes Lebensmittelprodukt bestehend aus einer Verzehrmasse mehr als 70 Gewichts-%, bevorzugt mehr als 90 Gewichts-%, aus (a) Zucker/Biopolymer, (b) Kakaobutter und/oder (c) Kakao und/oder (d) Milchbestandteile, wobei aus(a, c, d) erfindungsgemäss sphärische, amorphe Komposite-Partikeln gebildet werden mit einen Volumenanteil an Kakaobutter als fettkontinuierlicher Phase von kleiner als 50 Gewichts-% bevorzugt kleiner als 30 Gewichts-%, noch weitergehend bevorzugt kleiner als 25 Gewichts-% und hat dennoch bei 40°C eine Fliessgrenze $\tau_0$, die um mindestens 50%, bevorzugt 70%, weitergehend bevorzugt 90% gegenüber einer herkömmlich strukturierten Schokoladensuspension gleicher Zusammensetzung reduziert ist.

Fliessgrenze und Viskositätsfunktion werden nach OICCC (Office International du Cacao, du Chocolat et de la Confiserie) Standard Methode 46 (2000) ermittelt (z.B. beschrieben in A. Hess, Süsswaren 9/2001 oder via: http://caobisco.eu/caobisco-chocolate- biscuits-confectionery-europe-page-44-Analytical-methods-.html) und nach Windhab approximiert (J.-C. Eischen and E. J. Windhab; Applied Rheology 1/2,2002, pp.32-34).

Bei der Messung wurde allerdings anstelle der konzentrischen Zylindergeometrie CC27 (Anton Paar GmbH, Deutschland) eine Vane-Geometrie (ST22-4V-40, Anton Paar GmbH, Deutschland) mit einem Probenvolumen von 40 ml verwendet. Für die Messung wurde die Messgeometrie vollständig in die Probe eingetaucht (Oberfläche 10 mm unterhalb der Probegrenze). Als Probengefäss wurde der Messzylinder der CC27 (Messzelle TEZ 150P-C) Geometrie verwendet.

Für die Messung wurde ausserdem eine erweiterte Scherrampe gefahren: Die Probe (300 ml) wurde vorgängig während 20 min bei 50 rpm und 40 °C in einem Mischkneter (Ikavisc Messkneter MKD 0.6-H60) vorgemischt und anschliessend 40 ml in die oben beschriebene Messgeometrie des Rheometers (PHYSICA MCR 300, Modular Compact Rheometer, Anton Paar GmbH, Deutschland) eingefüllt und vermessen. Dabei wurde eine Aufwärtsrampe von 0.01 s-1 bis 250 s-1 während 10 Minuten bei 40°C (30 Messpunkte, logarithmische Verteilung) aufgenommen. Anschliessend an die Aufwärtsrampe wurde eine Abwärtsrampe ebenfalls bei 40°C in umgekehrter Richtung aufgezeichnet (30 Messpunkte, 10 min).

Für die Bestimmung der Fliessgrenze wurde schliesslich mit der Auswertesoftware RheoPlus (Rheoplus/32 Multi3 V3.61) die Abwärtsrampen über den kompletten Messbereich ausgewertet unter Anwendung des Modells IOCCC 2000 Windhab.

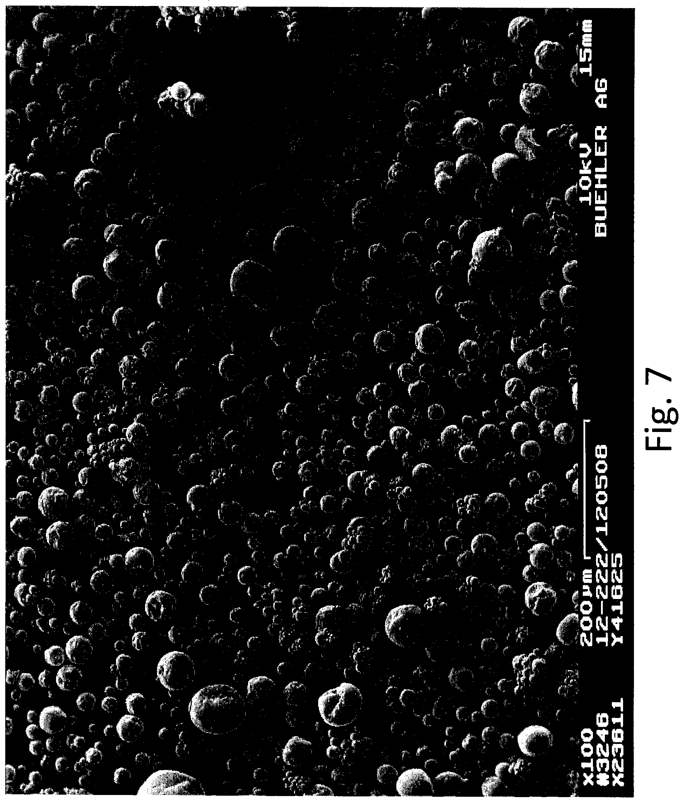

Figur 7 zeigt eine REM (rasterelektronenmikroskopische)- Aufnahme von erfindungsgemässen sphärischen Partikeln gemäss Beispiel 1 wie oben gezeigt.

Figur 8 zeigt die Struktur von kantigen Partikeln, wie sei zum Beispiel beim Prozess der Zerkleinerung in Walzwerken entstehen. Da alle Partikel durch mehrere, sich im Abstand verengende Walzenpaare geführt werden, werden zwangsläufig alle Partikel, die grösser als der kleinste Walzenabstand sind gebrochen. Es müssen daher kantige, nicht sphärische Partikel entstehen.

Neben diesem Verfahren wird auch die Zerkleinerung in Prall- oder Strahlmühlen (Trockenvermahlung) und Rührwerkskugelmühlen eingesetzt.

Bei allen Zerkleinerungsverfahren, die konventionell eingesetzt werden (z.B. Walzenvermahlung, Trockenvermahlung in Prall- oder Schermühlen, Rührwerkskugelmühlen und Kugelmühlen), erfolgt eine Reduktion der Partikelgrösse ausgehend von grossen Feststoffpartikeln, wie z.B. Zuckerkristallen von 1-2 mm auf kleine Partikeln im Bereich 100 Mikrometer und darunter. Bei diesen Prozessen entstehen zwingend Bruchstücke, die mehrheitlich nicht sphärische, runde Formen aufweisen. Insbesondere im Grössenbereich zwischen $5\mu$m und $100\mu$m kann dies gut lichtmikroskopisch beobachtet werden.

Die Anmeldung umfasst die folgende Aspekte.

Aspekt I: Sphärisches Partikel zur Herstellung eines Lebensmittelprodukts, dadurch gekennzeichnet, dass das Partikel ein Matrixmaterial aus einem amorph verfestigten Biopolymer, insbesondere aus einem amorph verfestigten Zucker, enthält, wobei das Matrixmaterial bevorzugt amorph verfestigten Zucker mit einem Dextroseäquivalent von grösser 20 enthält oder daraus besteht, wobei das Matrixmaterial einen Gleichgewichtswassergehalt von kleiner als 10 Gewichts-% aufweist, wobei insbesondere in das Matrixmaterial Feststoffteilchen und/oder Flüssigkeits- und/oder Gasvolumina eingebettet sind.

Aspekt II: Sphärisches Partikel gemäss Aspekt I, dadurch gekennzeichnet, dass das Partikel zu mindestens 5 Volumen-%, bevorzugt zu mindestens 10 Volumen-%, besonders bevorzugt zu mindestens 30 Volumen-%, weiter besonders bevorzugt zu mindestens 50 Volumen-%, und/oder zu mindestens 50 Gewichts-%, bevorzugt zu mindestens 60 Gewichts-% aus dem Matrixmaterial besteht.

Aspekt III: Sphärisches Partikel gemäss Aspekt I oder II, dadurch gekennzeichnet, dass das Partikel einen Durchmesser von kleiner 500 $\mu$m aufweist.

Aspekt IV: Sphärisches Partikel gemäss einem der Aspekte I bis III, dadurch gekennzeichnet, dass das Biopolymer eine Wasseraktivität von unter 0.7, insbesondere von unter 0.6, bevorzugt von unter 0.55, aufweist.

Aspekt V: Sphärisches Partikel gemäss einem der Aspekte I bis IV, dadurch gekennzeichnet, dass mindestens einer der folgenden Bestandteile in das Trägermaterial eingebettet ist: ein Kakaobestandteil, ein Milchbestandteil, Fett, ein Aromastoff.

Aspekt VI: Sphärisches Partikel gemäss einem der Aspekte I bis V, dadurch gekennzeichnet, dass das Matrixmaterial eine Dichte zwischen 0.1 und 2.5 g/cm$^3$ aufweist.

Aspekt VII: Agglomerat aus sphärischen Partikeln gemäss einem der Aspekte I bis VI.

Aspekt VIII: Verfahren zum Herstellen von sphärischen Partikeln gemäss einem der Aspekte I bis VI und/oder Agglomeraten gemäss einem Aspekt VII, gekennzeichnet durch die folgenden Verfahrensschritte

(i) Bereitstellen einer, bevorzugt wässrigen, Biopolymerfluidphase, insbesondere Lösen eines Biopolymers, insbesondere Lösen von Zuckerbestandteilen, bevorzugt von Zuckerbestandteilen mit einem Dextroseäquivalent von grösser 20, in, bevorzugt wässriger, Fluidphase;
(ii) Insbesondere Hinzufügen von Feststoffteilchen und/oder Flüssigkeits- und/oder Gasvolumina;
(iii) Durchführen eines Formgebungs- und Vereinzelungsprozesses, insbesondere eines Tropfenbildungsprozesses, insbesondere Sprühtrocknen, der in Schritt (ii) erhaltenen wässrigen Phase oder Dispersion;
(iv) Verfestigen zu sphärischen Partikeln, insbesondere mit einem Gleichgewichtswassergehalt von kleiner als 10 Gewichts-%.

Aspekt IX: Lebensmittelsuspension, dadurch gekennzeichnet, dass die Lebensmittelsuspension ein im Wesentlichen homogenes Trägermaterial enthält, in welches sphärische Partikel, insbesondere gemäss einem der Aspekte I bis VI, und/oder Agglomerate von sphärischen Partikeln, insbesondere gemäss Aspekt VII, eingebettet sind, wobei die sphärischen Partikel ein Matrixmaterial aus einem amorph verfestigten Biopolymer, insbesondere einem Zucker, enthalten, wobei das Matrixmaterial bevorzugt amorph verfestigten Zucker mit einem Dextroseäquivalent von grösser 20 enthält oder daraus besteht.

Aspekt X: Lebensmittelsuspension, gemäss Aspekt IX, dadurch gekennzeichnet, dass das Biopolymer einen Gleichgewichtswassergehalt von kleiner als 10 Gewichts-% aufweist.

Aspekt XI: Lebensmittelsuspension, gemäss einem der Aspekte IX oder X, dadurch gekennzeichnet, dass mindestens 90% des Volumens aller der sphärischen Partikel eine Grösse von kleiner 500 µm haben.

Aspekt XII: Lebensmittelsuspension, gemäss einem der Aspekte IX bis XI, dadurch gekennzeichnet, dass das Trägermaterial eine Fettmasse enthält, die insbesondere Triglyceride enthält, welche bei 20° C mindestens teilkristallisiert sind.

Aspekt XIII: Verfahren zur Herstellung einer Lebensmittelsuspension gemäss einem der Aspekte IX bis XII, gekennzeichnet durch die folgenden Verfahrenschritte

(i) Bereitstellen von sphärischen Partikeln, insbesondere sphärischen Partikeln gemäss einem der Aspekte I bis VI und/oder Agglomeraten von sphärischen Partikeln, insbesondere gemäss Aspekt VII, insbesondere mit einem Verfahren gemäss Aspekt VIII,
(ii) Suspendieren oder Einmischen der sphärischen Partikeln in einem Trägermaterial.

Aspekt XIV: Verzehrmasse, umfassend ein Agglomerat aus Partikeln,
dadurch gekennzeichnet, dass
zumindest ein Teil der Partikel sphärische Partikel mit einem Matrixmaterial aus einem amorph verfestigten Biopolymer sind, insbesondere einem Zucker, wobei das Matrixmaterial bevorzugt amorph verfestigten Zucker mit einem Dextroseäquivalent von grösser 20 enthält oder daraus besteht, insbesondere sphärische Partikel gemäss einem der Aspekte I bis VI und/oder Agglomerate von sphärischen Partikeln, insbesondere gemäss Aspekt VII, sind.

Aspekt XV: Verzehrmasse gemäss Aspekt XIV, dadurch gekennzeichnet, dass ein weiterer Teil der Partikel Fettpartikel sind.

Aspekt XVI: Verfahren zum Herstellen einer Verzehrmasse gemäss einem der Aspekte XIV oder XV, gekennzeichnet durch die folgenden Verfahrensschritte

(i) Bereitstellen von sphärischen Partikeln und/oder Agglomeraten von sphärischen Partikeln, insbesondere mit einem Verfahren gemäss Anspruch 8,
(ii) Bereitstellen von weiteren Partikeln, insbesondere Fettpartikeln,
(iii) Agglomeration der sphärischen Partikel und der weiteren Partikel, insbesondere unter Druck und/oder Temperatureinwirkung und/oder unter Hinzufügung von wässriger Flüssigkeit und/oder von Öl und/oder von Emulsion.

Aspekt XVII: Verfahren gemäss Aspekt XVI, dadurch gekennzeichnet, dass die Fettpartikel durch einen Formgebungs- und Vereinzelungsprozess, insbesondere einen Sprühprozess, hergestellt werden.

Aspekt XVIII: Lebensmittelprodukt, insbesondere Schokoladenprodukt, enthaltend eine Lebensmittelsuspension gemäss mindestens einem der Aspekte IX bis XII und/oder eine Verzehrmasse gemäss mindestens einem der Aspekt XIV oder XV.

Aspekt XIX: Lebensmittelsuspension, insbesondere nach einem der Aspekte IX bis XII, mit in einer Fettphase suspendierten Feststoffteilchen, die zu über 90% aus Bestandteilen ausgewählt aus der Gruppe bestehend aus Kakaobutter, Zucker und Kakao besteht, dadurch gekennzeichnet, dass die Verzehrmasse weniger als 50 Volumen-% Kakaobutter enthält und die Fliessgrenze $\tau_0$ bei 40°C kleiner als 10 Pa ist, wobei die Fettphase insbesondere weniger als 0.5% Emulgator enthält.

**Patentansprüche**

1. Sphärisches Partikel zur Herstellung einer Lebensmittelsuspension, **dadurch gekennzeichnet, dass** das Partikel ein Matrixmaterial aus einem amorph verfestigten Zucker enthält, , bevorzugt mit einem Dextroseäquivalent von grösser 20, wobei das Matrixmaterial einen Gleichgewichtswassergehalt von kleiner als 10 Gewichts-% aufweist, wobei Milch oder ein Milchbestandteil, insbesondere ein Milchfett oder Anteile von Milchfetten, in das Matrixmaterial eingebettet ist, wobei das Partikel zu mindestens 50 Volumen-%, und/oder zu mindestens 50 Gewichts-%, bevorzugt zu mindestens 60 Gewichts-% aus dem Matrixmaterial besteht und wobei insbesondere in das Matrixmaterial Flüssigkeits- und/oder Gasvolumina eingebettet sind.

2. Sphärisches Partikel gemäss Anspruch 1, **dadurch gekennzeichnet, dass** das Partikel einen Durchmesser von kleiner 100 $\mu$m aufweist, und insbesondere ist der Durchmesser zwischen 2 $\mu$m und 40 $\mu$m.

3. Sphärisches Partikel gemäss einem der Ansprüche 1 oder 2, **dadurch gekennzeichnet, dass** der amorphe Zucker eine Wasseraktivität von unter 0.7, insbesondere von unter 0.6, bevorzugt von unter 0.55, aufweist.

4. Sphärisches Partikel gemäss einem der Ansprüche 1 bis 3, **dadurch gekennzeichnet, dass** mindestens einer der folgenden Bestandteile in das Matrixmaterial eingebettet ist: ein Kakaobestandteil, Fett, ein Aromastoff.

5. Sphärisches Partikel gemäss einem der Ansprüche 1 bis 4, **dadurch gekennzeichnet, dass** das Matrixmaterial eine Dichte zwischen 0.1 und 2.5 g/cm$^3$ aufweist.

6. Agglomerat aus sphärischen Partikeln gemäss einem der Ansprüche 1 bis 5.

7. Verfahren zum Herstellen von sphärischen Partikeln gemäss einem der Ansprüche 1 bis 5 und/oder Agglomeraten gemäss einem Anspruch 6, **gekennzeichnet durch** die folgenden Verfahrensschritte

   (i) Bereitstellen einer fluiden, bevorzugt wässrigen, Zuckerphase, insbesondere Lösen eines Zuckers, bevorzugt mit einem Dextroseäquivalent von grösser 20, in, bevorzugt wässriger, Fluidphase;
   (ii) Hinzufügen von Milch oder Milchbestandteilen, insbesondere von Milchfett oder Anteilen von Milchfetten, weiter insbesondere Hinzufügen von weiteren Feststoffteilchen und/oder Flüssigkeits- und/oder Gasvolumina;
   (iii) Durchführen eines Formgebungs- und Vereinzelungsprozesses, insbesondere eines Tropfenbildungsprozesses, insbesondere Sprühtrocknen, der in Schritt (ii) erhaltenen wässrigen Phase oder Dispersion;
   (iv) Verfestigen zu sphärischen Partikeln, insbesondere mit einem Gleichgewichtswassergehalt von kleiner als 10 Gewichts-%.

8. Lebensmittelsuspension, **dadurch gekennzeichnet, dass**
   die Lebensmittelsuspension ein im Wesentlichen homogenes Trägermaterial enthält, in welches sphärische Partikel, insbesondere gemäss einem der Ansprüche 1 bis 5, und/oder Agglomerate von sphärischen Partikeln, insbesondere gemäss Anspruch 6, eingebettet sind,
   wobei die sphärischen Partikel ein Matrixmaterial aus einem amorph verfestigten Zucker, enthalten, wobei das Matrixmaterial bevorzugt amorph verfestigten Zucker mit einem Dextroseäquivalent von grösser 20 enthält oder daraus besteht, und ein Milchbestandteil, insbesondere ein Milchfett oder Anteile von Milchfetten, in das Matrixmaterial eingebettet ist und wobei das Partikel zu mindestens 50 Volumen-%, und/oder zu mindestens 50 Gewichts-%, bevorzugt zu mindestens 60 Gewichts-% aus dem Matrixmaterial besteht, und wobei das Trägermaterial eine Fettmasse enthält, die Triglyceride enthält, welche bei 20° C mindestens teilkristallisiert sind.

9. Lebensmittelsuspension, gemäss Anspruch 8, **dadurch gekennzeichnet, dass** der amorphe Zucker einen Gleichgewichtswassergehalt von kleiner als 10 Gewichts-% aufweist.

10. Lebensmittelsuspension, gemäss einem der Ansprüche 8 oder 9, **dadurch gekennzeichnet, dass** mindestens 90% des Volumens aller der sphärischen Partikel eine Grösse von kleiner 100 $\mu$m haben und insbesondere mindestens 80% des Volumens aller der sphärischen Partikel eine Durchmesser grösser als 1$\mu$m.

11. Verfahren zur Herstellung einer Lebensmittelsuspension gemäss einem der Ansprüchen 8 bis 10, **gekennzeichnet durch** die folgenden Verfahrensschritte:

(i) Bereitstellen von sphärischen Partikeln gemäss einem der Ansprüche 1 bis 5 und/oder Agglomeraten von sphärischen Partikeln gemäss Anspruch 6, insbesondere mit einem Verfahren gemäss Anspruch 7,
(ii) Suspendieren oder Einmischen der sphärischen Partikeln in einem Trägermaterial, das eine Fettmasse enthält, die Triglyceride enthält, welche bei 20° C mindestens teilkristallisiert sind.

12. Verzehrmasse, umfassend ein Agglomerat aus Partikeln, **dadurch gekennzeichnet, dass** zumindest ein Teil der Partikel gemäss einem der Ansprüche 1 bis 5 und/oder Agglomerate von sphärischen Partikeln, insbesondere gemäss Anspruch 6, sind und ein weiterer Teil der Partikel Fettpartikel sind.

13. Verfahren zum Herstellen einer Verzehrmasse gemäss einem der Ansprüche 12, **gekennzeichnet durch** die folgenden Verfahrensschritte

(i) Bereitstellen von sphärischen Partikeln gemäss einem der Ansprüche 1-5 und/oder Agglomeraten von sphärischen Partikeln gemäss Anspruch 6, insbesondere mit einem Verfahren gemäss Anspruch 7,
(ii) Bereitstellen von Fettpartikeln,
(iii) Agglomeration der sphärischen Partikel und der weiteren Partikel, insbesondere unter Druck und/oder Temperatureinwirkung und/oder unter Hinzufügung von wässriger Flüssigkeit und/oder von Öl und/oder von Emulsion.

14. Verfahren gemäss Anspruch 13, **dadurch gekennzeichnet, dass** die Fettpartikel durch einen Formgebungs- und Vereinzelungsprozess, insbesondere einen Sprühprozess, hergestellt werden.

15. Lebensmittelprodukt, insbesondere Schokoladenprodukt, enthaltend eine Lebensmittelsuspension gemäss mindestens einem der Ansprüche 8 bis 11 und/oder eine Verzehrmasse gemäss Anspruch 12.

16. Lebensmittelsuspension, insbesondere nach einem der Ansprüche 8 bis 10, mit in einer Fettphase suspendierten Feststoffteilchen, die zu über 90% aus Bestandteilen ausgewählt aus der Gruppe bestehend aus Kakaobutter, Zucker und Kakao besteht, **dadurch gekennzeichnet, dass** die Verzehrmasse weniger als 50 Volumen-% Kakaobutter enthält und die Fliessgrenze $\tau_0$ bei 40°C kleiner als 10 Pa ist, wobei die Fettphase weniger als 0.5% Emulgator enthält.

Fig. 1a

Fig. 1b

EP 3 335 569 A1

Fig. 2a

EP 3 335 569 A1

Fig. 2b

Fig. 3

EP 3 335 569 A1

Fig. 4

Fig. 5a

Fig. 5b

Fig. 6

Fig. 7

Fig. 8

Europäisches
Patentamt

European
Patent Office

Office européen
des brevets

# EUROPÄISCHER RECHERCHENBERICHT

Nummer der Anmeldung

EP 18 15 2465

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 922 449 A2 (NAT STARCH CHEM INVEST [US]) 16. Juni 1999 (1999-06-16) | 1-7, 12-14 | INV. A23G1/00 |
| Y | * Absätze [0001], [0006], [0008], [0011], [0014], [0022], [0048] - [0066]; Ansprüche 1-30; Beispiele 3,5,10,13 * | 8-11,15, 16 | A23G1/46 A23G1/30 A23G1/40 A23L33/10 A23L33/20 |
| Y,D | WO 2006/130698 A2 (HERSHEY CO [US]; HANSELMANN WILLIAM [US]) 7. Dezember 2006 (2006-12-07) * Absätze [0002] - [0004], [0008], [0010], [0014], [0028] - [0032]; Ansprüche 1-71; Beispiel 3 * | 8-11,15, 16 | A23P10/22 A23P10/40 |
| A | EP 1 064 856 A2 (GIVAUDAN SA [CH]) 3. Januar 2001 (2001-01-03) * Absätze [0017] - [0032]; Ansprüche 11-17 * | 1-16 | |
| A | US 5 124 162 A (BOSKOVIC MARIJAN ANTE [US] ET AL) 23. Juni 1992 (1992-06-23) * Spalte 1 - Spalte 8; Ansprüche 1-19; Abbildungen 1,2 * | 1-16 | **RECHERCHIERTE SACHGEBIETE (IPC)** A23G A23L A23P |
| A | EP 1 304 044 A2 (INT FLAVORS & FRAGRANCES INC [US]) 23. April 2003 (2003-04-23) * Absätze [0004], [0007], [0010] - [0016], [0028]; Ansprüche 1-8 * | 1-16 | |

Der vorliegende Recherchenbericht wurde für alle Patentansprüche erstellt

| Recherchenort | Abschlußdatum der Recherche | Prüfer |
|---|---|---|
| München | 13. März 2018 | Schlegel, Birgit |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 2465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2018

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0922449 | A2 | 16-06-1999 | AT | 350014 | T | 15-01-2007 |
| | | | AU | 736348 | B2 | 26-07-2001 |
| | | | CA | 2252314 | A1 | 30-04-1999 |
| | | | DE | 69836793 | T2 | 18-10-2007 |
| | | | EP | 0922449 | A2 | 16-06-1999 |
| | | | EP | 1371363 | A1 | 17-12-2003 |
| | | | JP | 4170473 | B2 | 22-10-2008 |
| | | | JP | H11236338 | A | 31-08-1999 |
| WO 2006130698 | A2 | 07-12-2006 | US | 2006286272 | A1 | 21-12-2006 |
| | | | WO | 2006130698 | A2 | 07-12-2006 |
| EP 1064856 | A2 | 03-01-2001 | KEINE | | | |
| US 5124162 | A | 23-06-1992 | AT | 133538 | T | 15-02-1996 |
| | | | AU | 648208 | B2 | 14-04-1994 |
| | | | BR | 9204879 | A | 01-06-1993 |
| | | | CA | 2083444 | A1 | 27-05-1993 |
| | | | CN | 1074933 | A | 04-08-1993 |
| | | | DE | 69208058 | D1 | 14-03-1996 |
| | | | DE | 69208058 | T2 | 22-08-1996 |
| | | | EP | 0545632 | A1 | 09-06-1993 |
| | | | ES | 2084952 | T3 | 16-05-1996 |
| | | | HK | 151996 | A | 16-08-1996 |
| | | | JP | H06220485 | A | 09-08-1994 |
| | | | NZ | 245237 | A | 25-11-1993 |
| | | | US | 5124162 | A | 23-06-1992 |
| EP 1304044 | A2 | 23-04-2003 | EP | 1304044 | A2 | 23-04-2003 |
| | | | US | 2003077378 | A1 | 24-04-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006130698 A
- WO 2006005525 A
- CH 502834
- EP 1064856 A
- US 5123162 A
- EP 1304044 A
- WO 9907901 A
- US 5637344 A
- US 3472658 A

**In der Beschreibung aufgeführte Nicht-Patentliteratur**

- Zucker und Zuckerwaren. Hoffmann/Mauch/Untze. 2002, 234-235
- **J.-C. EISCHEN ; E. J. WINDHAB.** *Applied Rheology,* 2002, vol. 1/2, 32-34